# EUROPEAN PATENT APPLICATION

(11) **EP 4 697 136 A1**
(43) Date of publication of application: **18.02.2026**
(21) Application number: 25729208.6
(22) Date of filing: 05.06.2025
(51) Int. Cl.: G06F 1/16

(54) **ELECTRONIC DEVICE INCLUDING DISPLAY SUPPORT STRUCTURE**

(30) Priority: 27.06.2024 KR 20240084286; 26.09.2024 KR 20240130378
(71) Applicant: Samsung Electronics Co., Ltd, Suwon-si, Gyeonggi-do 16677 (KR)
(72) Inventor: KIM, Yoonsik, Suwon-si, Gyeonggi-do 16677 (KR)
(74) Representative: Appleyard Lees IP LLP
(86) International application number: PCT/KR2025/007719
(87) International publication number: WO 2026/005330

(57) **Abstract**

According to an embodiment of the disclosure, an electronic device may include a housing including a first housing, a second housing, and a hinge assembly In an embodiment, the hinge assembly may include a hinge bracket, a first rotation member including a first rotating body configured to rotate about the at least one folding axis, a first hinge plate having a portion disposed in the first housing and another portion fixed to the first rotating body between the flexible display and the first rotation member, a first receiving groove provided in the first hinge plate in an area overlapping with the first rotating body, and a first protection member including a first portion disposed within the first receiving groove, and a second portion extending from one side of the first portion and disposed on the first rotating body outside the first hinge plate. Various other embodiments are available.

## Description

### [Technical Field]

Embodiment(s) of the disclosure relate to an electronic device, for example, an electronic device including a display support structure.

### [Background Art]

An electronic device may refer to a device that executes a specific function according to a loaded program, such as a home appliance, an electronic notebook, a portable multimedia player, a mobile communication terminal, a tablet PC, a video/audio device, a desktop/laptop computer, or a vehicle navigation device. For example, these electronic devices may output stored information as sound or an image. As the integration level of electronic devices increases and ultra high-speed, large-capacity wireless communication becomes more common, a single electronic device such as a mobile communication terminal may recently be equipped with various functions. For example, in addition to a communication function, an entertainment function such as games, a multimedia function such as music/video playback, a communication and security function for mobile banking, and a function such as schedule management or an electronic wallet are integrated in a single electronic device.

As the use of personal or portable communication devices such as smartphones becomes widespread, user demands for portability and ease of use are increasing. For example, a touchscreen display is an output device that outputs a screen, for example, visual information, and may provide a virtual keypad that replaces a mechanical input device (e.g., a button-type input device). Accordingly, portable communication devices or electronic devices may be miniaturized while providing the same or improved usability (e.g., a larger screen). On the other hand, as flexible displays, for example, foldable or rollable displays become commercialized, the portability and ease of use of electronic devices are expected to further improve. An electronic device including a flexible display may be carried with a plurality of different structures (e.g., housings) in a folded or rolled state and provide a large screen in an unfolded state, thereby improving portability and ease of use.

The above information is presented as related art only to assist with an understanding of the disclosure. No determination has been made, and no assertion is made, as to whether any of the above might be applicable as prior art with regard to the disclosure.

### [Disclosure of Invention]

### [Solution to Problems]

According to an aspect of the disclosure, an electronic device may include a housing including a first housing, a second housing, and a hinge assembly pivotably coupling the first housing and the second housing and configured to provide at least one folding axis, wherein housing is configured to form an exterior of the electronic device, and a flexible display including a first display area disposed on one surface of the first housing, a second display area disposed on one surface of the second housing, and a folding area connecting the first display area and the second display area and disposed on at least a portion of the hinge assembly, wherein the flexible display is configured to output a screen. In an embodiment, the folding area may be configured to be deformed into a curved shape or a flat shape according to pivoting of the first housing or the second housing. In an embodiment, the hinge assembly may include a hinge bracket, a first rotation member including a first rotating body rotatably coupled to the hinge bracket and configured to rotate about the at least one folding axis, a first hinge plate having a portion disposed in the first housing and another portion fixed to the first rotating body between the flexible display and the first rotation member, a first receiving groove provided in the first hinge plate in an area overlapping with the first rotating body, and a first protection member including a first portion disposed within the first receiving groove, and a second portion extending from one side of the first portion and disposed on the first rotating body outside the first hinge plate.

In one embodiment, on the first hinge plate, the first protection member is configured to inhibit deformation of the folding area of the flexible display due to an external force.

In one embodiment, the first portion of the first protection member is directly attached to the first hinge plate, and the second portion of the first protection member is disposed to be contactable with the first rotating body without being attached to the first rotating body by including a cover film disposed to face the first rotating body.

In one embodiment, a portion of a surface of the first protection member is disposed to face the flexible display and to form a continuous plane with a surface of the first rotating body or a surface of the hinge plate.

In one embodiment, the hinge assembly further includes a first seating groove provided in a first depth from a surface of the first rotating body, and a second seating groove provided in a second depth smaller than the first depth from the surface of the first rotating body and disposed in contact with the first seating groove, wherein a portion of the hinge plate and the first portion of the first protection member are at least partially disposed in the first seating groove, and wherein the second portion of the first protection member is at least partially disposed in the second seating groove.

In one embodiment, the first protection member includes at least one of a sponge material, a synthetic resin material, or a metal material.

In one embodiment, the hinge assembly further includes a hinge cover disposed between the first housing and the second housing and configured to be at least partially exposed to an external space, as the first housing or the second housing pivots, and wherein the hinge bracket is disposed on the hinge cover.

In one embodiment, the first protection member is disposed between the folding area and the hinge cover.

In one embodiment, the hinge assembly further includes: a second rotation member including a second rotating body rotatably coupled to the hinge bracket and configured to rotate about the at least one folding axis, a second hinge plate having a portion disposed in the second housing and another portion fixed to the second rotating body between the flexible display and the second rotation member, a second receiving groove provided in the second hinge plate in an area overlapping with the second rotating body, and a second protection member having a portion disposed within the second receiving groove and another portion disposed on the second rotating body outside the second hinge plate, and wherein when the folding area is in a flat shape, the second protection member is disposed side by side with the first protection member and configured to inhibit deformation of the folding area of the flexible display on the second hinge plate due to the external force.

In one embodiment, the invention further comprises a third protection member having a portion disposed to face the first protection member and another portion disposed to face the hinge plate, wherein the third protection member is at least partially disposed between the hinge plate and the flexible display.

According to an aspect of the disclosure, an electronic device may include a housing including a first housing, a second housing, and a hinge assembly pivotably coupling the first housing and the second housing and configured to provide at least one folding axis, wherein the housing is configured to form an exterior of the electronic device, and a flexible display including a first display area disposed on one surface of the first housing, a second display area disposed on one surface of the second housing, and a folding area connecting the first display area and the second display area and disposed on at least a portion of the hinge assembly, wherein the flexible display is configured to output a screen. In an embodiment, the hinge assembly may include a hinge bracket, a rotation member including a rotating body rotatably coupled to the hinge bracket and configured to rotate about the at least one folding axis, and a support body extending from the rotating body, a hinge plate having a portion disposed in the first housing or the second housing and another portion fixed to the rotation member between the flexible display and the rotation member, a receiving groove provided in the first hinge plate in an area overlapping with the rotating body, and a protection member including a first portion disposed on the hinge plate within the receiving groove, and a second portion extending from one side of the first portion and disposed on the rotating body outside the hinge plate.

In one embodiment, the protection member is configured to accumulate an elastic force, while being deformed in response to an external force.

In one embodiment, the first portion of the protection member is directly attached to the first hinge plate, and the second portion of the protection member is disposed to be contactable with the first rotating body without being attached to the first rotating body.

In one embodiment, the second portion of the protection member includes a cover film disposed to face the rotating body.

In one embodiment, a portion of a surface of the protection member is disposed to face the flexible display and to form a continuous plane with a surface of the rotating body or a surface of the hinge plate.

In one embodiment, the hinge assembly further includes a first seating groove provided in a first depth from a surface of the first rotating body, and a second seating groove provided in a second depth smaller than the first depth from the surface of the first rotating body and disposed in contact with the first seating groove, wherein a portion of the hinge plate and the first portion of the protection member are at least partially disposed in the first seating groove, and wherein the second portion of the protection member is at least partially disposed in the second seating groove.

In one embodiment, the protection member includes at least one of a sponge material, a synthetic resin material, or a metal material.

In one embodiment, wherein the first portion of the protection member is disposed between the folding area and the hinge plate.

In one embodiment, the hinge assembly further includes a hinge cover disposed between the first housing and the second housing and configured to be at least partially exposed to an external space, as the first housing or the second housing pivots, and wherein the hinge bracket is disposed on the hinge cover.

In one embodiment, the protection member is disposed between the folding area and the hinge cover.

### [Brief Description of Drawings]

The above aspects or other aspects, configurations and/or advantages of an embodiment of the disclosure may be more apparent from the following detailed description given with reference to the accompanying drawings.
FIG. 1 is a block diagram illustrating an electronic device in a network environment according to an embodiment of the disclosure.
FIG. 2 is a diagram illustrating an electronic device in an unfolded state according to an embodiment of the disclosure.
FIG. 3 is a diagram illustrating an electronic device in a folded state according to an embodiment of the disclosure.
FIG. 4 is an exploded perspective view illustrating an electronic device according to an embodiment of the disclosure.
FIG. 5 is a diagram illustrating housings coupled to each other in an electronic device according to an embodiment of the disclosure.
FIG. 6 is a diagram illustrating hinge plates disposed in an electronic device according to an embodiment of the disclosure.
FIG. 7 is a diagram illustrating arrangement of hinge assembly(assemblies) and electronic components within an electronic device according to an embodiment of the disclosure.
FIG. 8 is an exploded perspective view illustrating an electronic device according to an embodiment of the disclosure.
FIG. 9 is a plan view illustrating a hinge assembly disposed on housing(s) in an electronic device according to an embodiment of the disclosure.
FIG. 10 is an enlarged view illustrating a part 'E1' of FIG. 9 in an electronic device according to an embodiment of the disclosure.
FIG. 11 is a plan view illustrating a third protection member disposed on housing(s) in an electronic device according to an embodiment of the disclosure.
FIG. 12 is an exploded view illustrating a hinge assembly in an electronic device according to an embodiment of the disclosure, taken along line A-A' of FIG. 10.
FIG. 13 is an exploded view illustrating a hinge assembly in an electronic device according to an embodiment of the disclosure, taken along line B-B' of FIG. 10.
FIG. 14 is an exploded perspective view illustrating a protection member disposed in an electronic device or hinge assembly according to an embodiment of the disclosure.
FIG. 15 is a diagram illustrating a protection member disposed in an electronic device or hinge assembly according to an embodiment of the disclosure, taken along line A-A' of FIG. 10.
FIG. 16 is a diagram illustrating a protection member in an electronic device or hinge assembly according to an embodiment of the disclosure.
FIG. 17 is a diagram illustrating a protection member disposed in an electronic device or hinge assembly according to an embodiment of the disclosure, taken along line B-B' of FIG. 10.
FIG. 18 is a diagram illustrating a protection member disposed in an electronic device or hinge assembly according to an embodiment of the disclosure.
FIG. 19 is a diagram illustrating a protection member disposed in an electronic device or hinge assembly according to an embodiment of the disclosure.

Similar reference numerals may be assigned to similar parts, components, and/or structures throughout the attached drawings.

### [Mode for the Invention]

Electronic devices including flexible displays deformable between a state in which two different parts of a housing are folded to face each other and a state in which they are unfolded parallel to one side of each other have been commercialized. For example, a user may carry an electronic device with different parts of a flexible display arranged to overlap each other, and when outputting a screen, the flexible display may be unfolded to provide a large screen. The folding or unfolding operation of the electronic device (or a housing) may be implemented, for example, by moving a plurality of components relative to each other and changing their relative alignment state. The components that implement the folding operation (or unfolding operation) of the electronic device (or the housing) may support a portion of the flexible display. For example, an area (hereinafter, referred to as a 'folding area') of the flexible display, which is deformed between a flat shape and a curved shape, may be supported by the components that implement the folding operation (or unfolding operation) of the electronic device (or the housing). The components that implement the folding operation (or unfolding operation) may include an acceptable range of manufacturing tolerances or assembly tolerances. Such a manufacturing tolerance or assembly tolerance may cause a height difference between two components on a surface supporting the folding area. The height difference on the surface supporting the folding area may deteriorate emotional quality perceived by a user or the reliability of a product, and cause damage to the flexible display in repeated deformation operations.

An embodiment of the disclosure is intended to at least address the above-described problems and/or disadvantages and at least provide the advantages described below, and may provide an electronic device including a support structure that stably supports a flexible display, even when there is a manufacturing tolerance and/or assembly tolerance.

An embodiment of the disclosure may provide an electronic device including a support structure that inhibits (or alleviates) damage to a flexible display in repeated deformation operations.

An embodiment of the disclosure may provide an electronic device that may provide improved emotional quality and/or improved reliability of a product to a user.

The technical problems to be solved in the disclosure document are not limited to those mentioned above, and other technical problems not mentioned may be clearly understood by those skilled in the art from the following description.

The following description of the attached drawings may provide an understanding of various exemplary implementations of the disclosure including the claims and their corresponding contents. An exemplary embodiment disclosed in the following description includes various specific details to help understanding, but is considered as one of various exemplary embodiments. Accordingly, those skilled in the art will understand that various changes and modifications may be made to the various implementations described in the disclosure without departing from the scope and spirit of the disclosure. In addition, a description of well-known functions and configurations may be omitted for clarity and conciseness.

The terms and words used in the following description and claims are not limited to their referential meaning, but may be used to clearly and consistently describe embodiments of the disclosure. Accordingly, it will be apparent to those skilled in the art that the following description of various implementations of the disclosure is provided for purposes of illustration and not for the purpose of limiting the scope of the disclosure, which is intended to be in accordance with the claims.

Unless the context clearly indicates otherwise, it should be understood that the singular forms of "a," "an," and "the" include plural meanings. Thus, for example, a "component surface" may be understood to include one or more of the surfaces of a component.

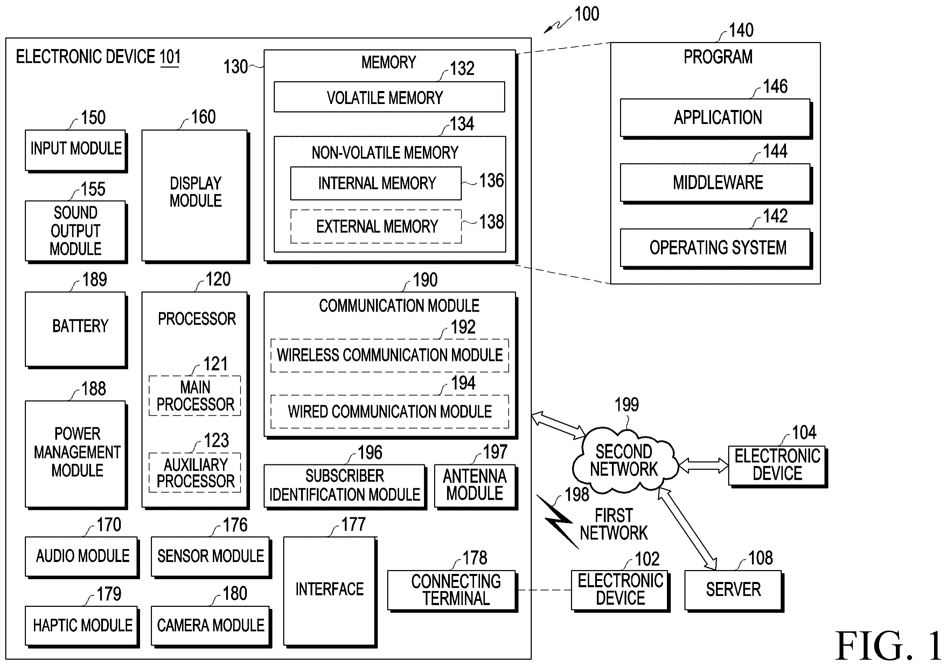

FIG. 1 is a block diagram illustrating an electronic device 101 in a network environment 100 according to an embodiment. Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the strength of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to an embodiment, the antenna module 197 may form an mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to embodiment(s) of the disclosure may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that embodiments of the disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B", "at least one of A and B", "at least one of A or B", "A, B, or C", "at least one of A, B, and C", and "at least one of A, B, or C", may include any one of, or all possible combinations of the items enumerated together in a corresponding one of the phrases. As used herein, such terms as "1^{st}" and "2^{nd}", or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with", "coupled to", "connected with", or "connected to" another element (e.g., a second element), it means that the element may be coupled with the other element directly (e.g., wiredly), wirelessly, or via a third element.

As used in connection with embodiments of the disclosure, the term "module" may include a unit implemented in hardware, software, or firmware, and may interchangeably be used with other terms, for example, logic, logic block, part, or circuitry. A module may be a single integral component, or a minimum unit or part thereof, adapted to perform one or more functions. For example, according to an embodiment, the module may be implemented in a form of an application-specific integrated circuit (ASIC).

Embodiments as set forth herein may be implemented as software (e.g., a program) including one or more instructions that are stored in a storage medium (e.g., internal memory 136 or external memory 138) that is readable by a machine (e.g., an electronic device). For example, a processor (e.g., a processor) of the machine (e.g., the electronic device) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to embodiment(s) of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to an embodiment, each component (e.g., a module or a program) of the above-described components may include a single entity or multiple entities, and some of the multiple entities may be separately disposed in different components. According to an embodiment, one or more of the above-described components may be omitted, or one or more other components may be added. Alternatively or additionally, a plurality of components (e.g., modules or programs) may be integrated into a single component. In such a case, the integrated component may still perform one or more functions of each of the plurality of components in the same or similar manner as they are performed by a corresponding one of the plurality of components before the integration. According to an embodiment, operations performed by the module, the program, or another component may be carried out sequentially, in parallel, repeatedly, or heuristically, or one or more of the operations may be executed in a different order or omitted, or one or more other operations may be added.

In the detailed following description, a longitudinal direction, width direction, and/or thickness direction of the electronic device may be mentioned. The longitudinal direction may be defined as a 'Y-axis direction', the width direction as an 'X-axis direction', and/or the thickness direction as a 'Z-axis direction'. In an embodiment, regarding directions in which components are oriented, 'negative/positive (-/+)' may be mentioned together with the Cartesian coordinate system illustrated in the drawings. For example, the front surface of the electronic device and/or a housing may be defined as a 'surface facing a +Z direction', and the rear surface thereof may be defined as a 'surface facing a -Z direction'. In an embodiment, a side surface of the electronic device and/or the housing may include an area facing a +X direction, an area facing a +Y direction, an area facing a -X direction, and/or an area facing a -Y direction. In an embodiment, the 'X-axis direction' may mean both the '-X direction' and the '+X direction'. It should be noted that this is based on the Cartesian coordinate system illustrated in the drawings, for brevity of description, and that the description of these directions or components does not limit the embodiment(s) of the disclosure. For example, depending on the design specifications of the electronic device or the usage habits of a user, the Cartesian coordinate system may be defined differently from that of the disclosure.

In an embodiment described below, a first housing and a second housing may be pivotably coupled to each other and rotate relative to each other between a first position in which they are folded to face each other and a second position in which they are unfolded, each parallel to one side of the other. In the embodiment described below, a description referring to the Cartesian coordinate system may be given generally based on an unfolded state in describing embodiments of the electronic device. In the electronic device of the embodiment described below, folding axis(es) may be understood as being substantially parallel to the Y-axis direction. However, the embodiments of the disclosure are not limited thereto and may be understood as including an electronic device having a structure in which the folding axis(es) are parallel to the X-axis direction.

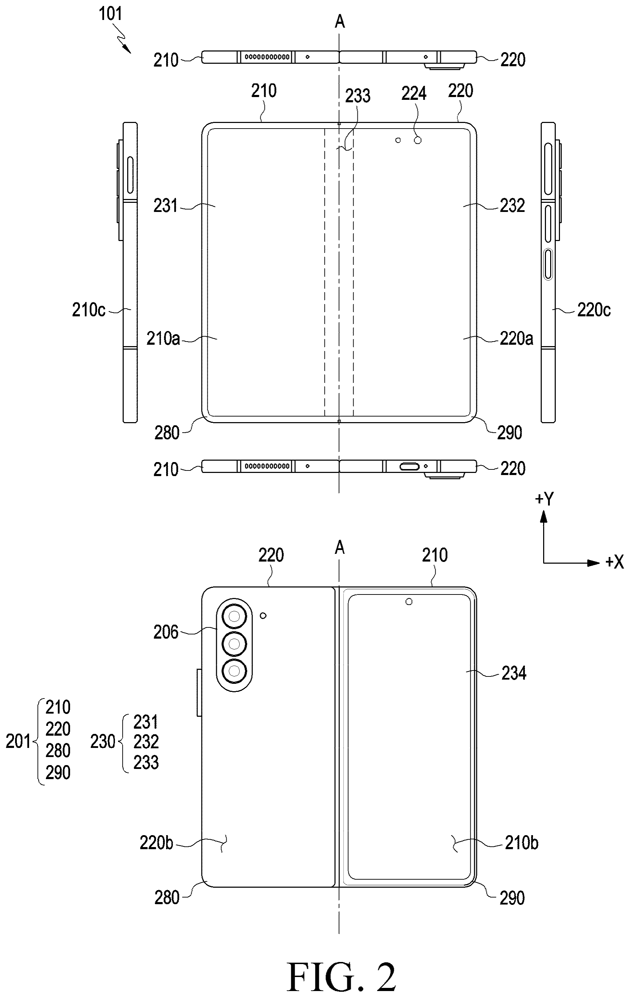

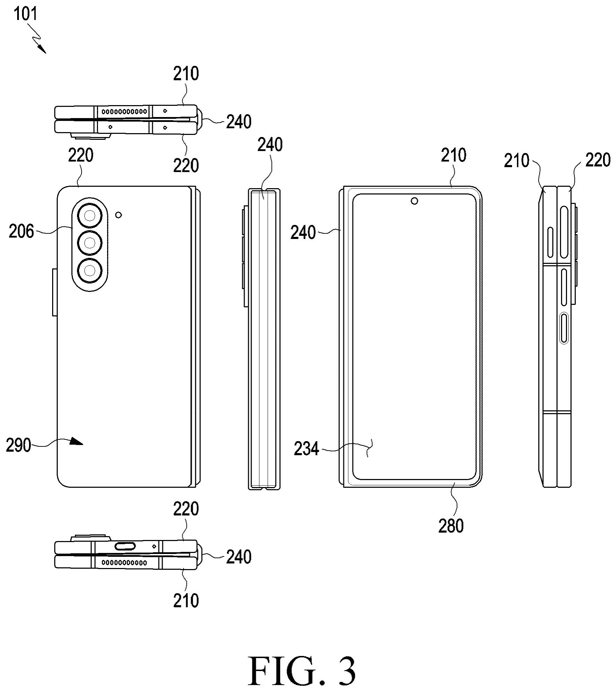

FIG. 2 is a diagram illustrating an electronic device in an unfolded state according to an embodiment of the disclosure. FIG. 3 is a diagram illustrating an electronic device in a folded state according to an embodiment of the disclosure.

Referring to FIGS. 2 and 3, the electronic device 101 may include a housing 201, a hinge cover 240 covering a foldable portion of the housing 201, and a display 230 disposed within a space formed by the housing 201. According to an embodiment, a surface on which a screen output from the display 230 is exposed may be defined as the front surface (e.g., a first front surface 210a and a second front surface 220a) of the electronic device 101. A surface opposite to the front surface may be defined as the rear surface (e.g., a first rear surface 210b and a second rear surface 220b) of the electronic device 101. In an embodiment, a surface surrounding a space between the front surface and the rear surface may be defined as the side surface (e.g., a first side surface 210c and a second side surface 220c) of the electronic device 101. The side surface of the electronic device 101 may be the side surface of at least one of a first housing 210 or a second housing 220. The electronic device 101 of FIGS. 2 and 3 may be referred to as a foldable electronic device, a portable electronic device, or a portable foldable electronic device. According to an embodiment, the housing 201 may be referred to as a foldable housing. The display 230 may be referred to as a "flexible display."

According to an embodiment, the housing 201 may include the first housing 210, the second housing 220 that may rotate relative to the first housing 210, a first rear cover 280, and a second rear cover 290. The housing 201 of the electronic device 101 is not limited to the shape and combination illustrated in FIGS. 2 and 3, and may be implemented in other shapes or combinations and/or couplings of components. For example, in an embodiment, the first housing 210 and the first rear cover 280 may be formed integrally, and the second housing 220 and the second rear cover 290 may be formed integrally.

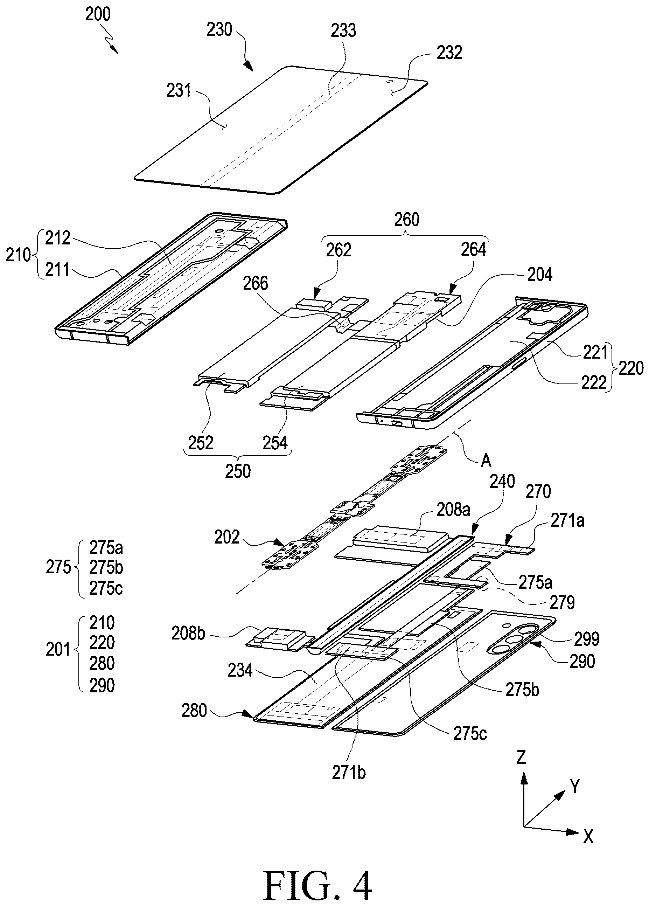

According to an embodiment, the first housing 210 may be connected to a hinge structure (e.g., a hinge assembly 202 of FIG. 4) and include the first front surface 210a facing a first direction, and the first rear surface 210b facing a second direction opposite to the first direction. The second housing 220 may be connected to the hinge assembly 202, include the second front surface 220a facing a third direction, and the second rear surface 220b facing a fourth direction opposite to the third direction, and rotate about the hinge assembly 202 with respect to the first housing 210. Accordingly, the electronic device 101 may be changed into the folded state or the unfolded state. The operation of folding or unfolding the electronic device 101 may be understood as the rotation of the first housing 210 with respect to the hinge structure or the rotation of the second housing 220 with respect to the hinge structure. In the folded state, the first front surface 210a of the electronic device 101 may face the second front surface 220a, and in the unfolded state, the third direction may be the same as or parallel to the first direction. Unless otherwise stated, a direction is described below based on the unfolded state of the electronic device 101.

According to an embodiment, the first housing 210 and the second housing 220 may be disposed on both sides of folding axis(es) A and have an overall symmetrical shape with respect to the folding axis(es) A. As described below, the angle or distance between the first housing 210 and the second housing 220 may vary depending on whether the electronic device 101 is in the unfolded state, the folded state, or an intermediate state. According to an embodiment, although the second housing 220 further includes a sensor area 224 in which sensors (e.g., a front camera) are arranged, the second housing 220 may have a shape in which it is symmetrical with the first housing 210 in the other areas.

According to an embodiment, the folding axis(es) A may be a plurality of (e.g., two) parallel folding axes. In the disclosure, the folding axis(es) A are provided along the longitudinal direction (Y-axis direction) of the electronic device 101, to which the direction of the folding axis(es) A is not limited. For example (not shown), an embodiment may be implemented in which the electronic device 101 includes a folding axis extending along the width direction (e.g., X-axis direction).

According to an embodiment, the electronic device 101 may include a structure to which a digital pen (not shown) may be attached. For example, the electronic device 101 may include a magnetic body configured to attach a digital pen to the side surface of the first housing 210 or the side surface of the second housing 220. According to an embodiment, the electronic device 101 may include a structure into which a digital pen may be inserted. For example, a hole (not shown) into which a digital pen may be inserted may be formed on the side surface of the first housing 210 or the side surface of the second housing 220 in the electronic device 101.

According to an embodiment, at least a portion of the first housing 210 and the second housing 220 may be formed of a metal material or non-metal material having a selected rigidity to support the display 230. At least a portion formed of the metal material may provide a ground plane of the electronic device 101 and may be electrically connected to a ground line formed on a PCB (e.g., a substrate portion 260 of FIG. 4).

According to an embodiment, the sensor area 224 may be formed to have a predetermined area in or adjacent to one corner of the second housing 220. However, the arrangement, shape, and size of the sensor area 224 are not limited to the illustrated example. For example, in another embodiment, the sensor area 224 may be provided in another corner or any area between an upper corner and a lower corner of the second housing 220 or in the first housing 210. In an embodiment, components for performing various functions built in the electronic device 101 may be exposed from the front surface of the electronic device 101 through the sensor area 224 or through one or more openings provided in the sensor area 224. In an embodiment, the components may include various types of sensors. The sensors may include, for example, at least one of a front camera, a receiver, or a proximity sensor.

In an embodiment, the first rear cover 280 may be disposed on one side of the folding axis(es) A on the rear surface of the electronic device 101 and have, for example, a substantially rectangular periphery, which may be surrounded by another structure of the first housing 210. Similarly, the second rear cover 290 may be disposed on the other side of the folding axis(es) A on the rear surface of the electronic device 101, and its periphery may be surrounded by another structure of the second housing 220.

In an embodiment, the first rear cover 280 and/or the second rear cover 290 may have a substantially symmetrical shape with respect to the folding axis(es) A. However, the first rear cover 280 and the second rear cover 290 do not necessarily have a mutual symmetrical shape, and in an embodiment, the electronic device 101 may include the first rear cover 280 and the second rear cover 290 of different shapes that are not symmetrical.

According to an embodiment, the first rear cover 280, the second rear cover 290, the first housing 210, and the second housing 220 may provide a space in which various components (e.g., a PCB or a battery) of the electronic device 101 may be arranged. According to an embodiment, one or more components may be disposed or visually exposed on the rear surface of the electronic device 101. For example, at least a portion of a sub-display 234 may be visually exposed through at least a portion of the first rear cover 280. In another embodiment, one or more components or sensors may be visually exposed through at least a portion of the second rear cover 290. In various embodiments, the sensors may include a proximity sensor and/or a camera module 206 (e.g. a rear camera).

In an embodiment, the front camera exposed from the front surface of the electronic device 101 through one or more openings provided in the sensor area 224 or the camera module 206 exposed through at least a portion of the second rear cover 290 may include one or more lenses, an image sensor, and/or an image signal processor. In some embodiments, two or more lenses (an infrared camera and wide-angle and telephoto lenses) and image sensors may be arranged on one surface of the electronic device 101.

In an embodiment, the hinge cover 240 may be disposed between the first housing 210 and the second housing 220 and cover an internal component (e.g., the hinge assembly 202 of FIG. 4). According to an embodiment, the hinge cover 240 may be covered by a portion of the first housing 210 and the second housing 220 or exposed to the outside, depending on the state (flat state or folded state) of the electronic device 101. In an embodiment, the hinge cover 240 and/or the hinge assembly 202 may be understood as a portion of the housing 201. In an embodiment, the hinge cover 240 may be understood as a portion of the hinge assembly 202.

According to an embodiment, as illustrated in FIG. 2, when the electronic device 101 is in the unfolded state, the hinge cover 240 may be covered by the first housing 210 and the second housing 220 without being exposed. In another example, as illustrated in FIG. 3, when the electronic device 101 is in the folded state (e.g., a fully folded state), the hinge cover 240 may be exposed to the outside between the first housing 210 and the second housing 220. In another example, when the first housing 210 and the second housing 220 are in the intermediate state where they are folded with a certain angle, the hinge cover 240 may be partially exposed to the outside between the first housing 210 and the second housing 220. However, in this case, an exposed area may be less than that in the fully folded state. In an embodiment, the hinge cover 240 may include a curved surface.

According to an embodiment, the display 230 may be disposed on a space formed (or defined) by the housing 201. For example, the display 230 may be mounted on a recess provided by the housing 201 and form most of the front surface of the electronic device 101. Accordingly, the front surface of the electronic device 101 may include the display 230 and partial areas of the first housing 210 and the second housing 220 which are adjacent to the display 230. The rear surface of the electronic device 101 may include the first rear cover 280, a partial area of the first housing 210 adjacent to the first rear cover 280, the second rear cover 290, and a partial area of the second housing 220 adjacent to the second rear cover 290.

In an embodiment, the display 230 may include a plurality of display areas spaced apart from each other. For example, the display 230 may include a first display area 231 disposed on the first housing 210, a second display area 232 disposed on the second housing 220, and a folding area 233. According to an embodiment, the first display area 231 and the second display area 232 may rotate about the folding axis(es) A. In an embodiment, the folding area 233 may be understood as disposed to overlap the folding axis(es) A, the hinge structure, and/or the hinge cover 240 in the front view of FIG. 2.

According to an embodiment, the display 230 may refer to a display at least partially deformable into a flat or curved surface. For example, the display 230 may be a foldable or flexible display. According to an embodiment, the display 230 may include the folding area 233, the first display area 231 disposed on one side of the folding area 233 (e.g., the left side) of the folding area 233 (illustrated in FIG. 2), and the second display area 232 disposed on the other side of the folding area 233 (e.g., the right side of the folding area 233 illustrated in FIG. 2). However, the area division of the display 230 is exemplary, and the display 230 may be divided into a plurality of areas (e.g., four or more or two areas) depending on a structure or function. For example, in the embodiment illustrated in FIG. 2, the display 230 may be divided into areas by the folding area 233 or the folding axis(es) A extending parallel to the Y axis. However, in another embodiment, the display 230 may be divided into areas based on a different folding area (e.g., a folding area parallel to the X axis) or a different folding axis (e.g., a folding axis parallel to the X axis). According to an embodiment, the display 230 may be coupled to or disposed adjacent to a touch detection circuit, a pressure sensor capable of measuring the intensity (pressure) of a touch, and/or a digitizer (not shown) configured to detect a magnetic field-type stylus pen.

According to an embodiment, the first display area 231 and the second display area 232 may have an overall symmetrical shape with respect to the folding area 233. According to an embodiment (not shown), the second display area 232 may include a cut notch according to the presence of the sensor area 224, unlike the first display area 231, but may have a shape substantially symmetrical with the first display area 231 in the other areas. For example, the first display area 231 and the second display area 232 may include a portion having a shape in which they are symmetrical with each other and a portion having a shape in which they are asymmetrical with each other.

Hereinafter, an operation of the first housing 210 and the second housing 220 according to the state (e.g., the flat or unfolded state or the folded state) of the electronic device 101 and each area of the display 230 will be described.

According to an embodiment, when the electronic device 101 is in the flat state (e.g., FIG. 2), the first housing 210 and the second housing 220 may be disposed to face in the same direction, forming a substantially 180-degree angle. The surface of the first display area 231 and the surface of the second display area 232 of the display 230 may form 180 degrees and face the same direction (e.g., a front direction of the electronic device). The folding area 233 may form the same plane as the first display area 231 and the second display area 232.

According to an embodiment, when the electronic device 101 is in the folded state (e.g., FIG. 3), the first housing 210 and the second housing 220 may be disposed to face each other. The surface of the first display area 231 and the surface of the second display area 232 of the display 230 may form a narrow angle (e.g., between about 0 and 10 degrees) with each other and face each other. When the electronic device 101 is in the folded state, at least a portion of the folding area 233 may be formed as a curved surface having a certain curvature.

According to an embodiment, when the electronic device 101 is in the intermediate state (not shown), the first housing 210 and the second housing 220 may be disposed at a certain angle with each other. The surface of the first display area 231 of the display 230 and the surface of the second display area 232 may form an angle that is larger than in the folded state and smaller than in the flat state. At least a portion of the folding area 233 may be formed as a curved surface having a certain curvature, and the curvature may be smaller than in the folded state.

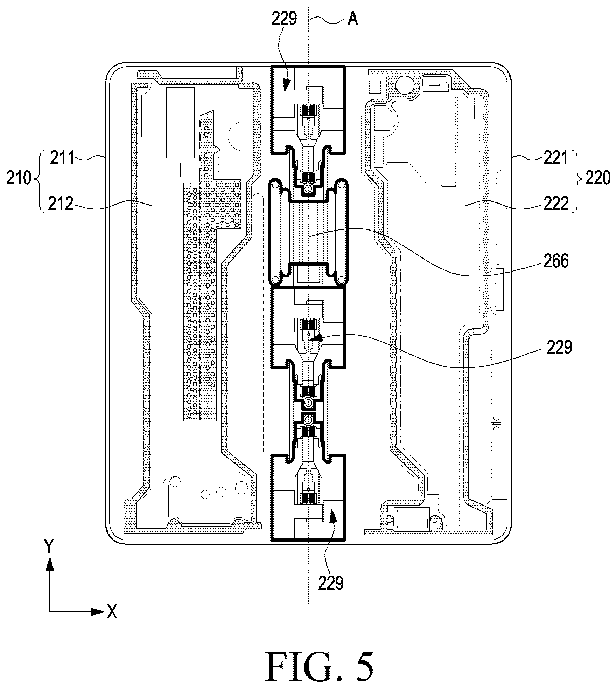

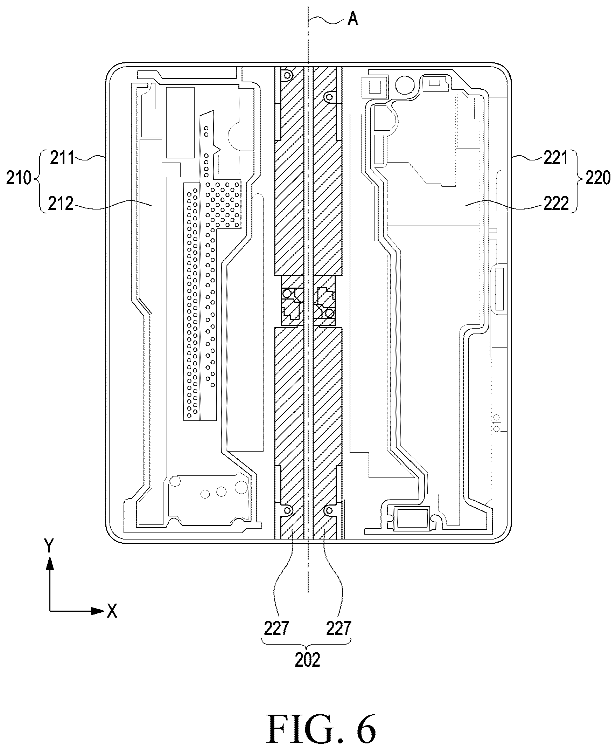

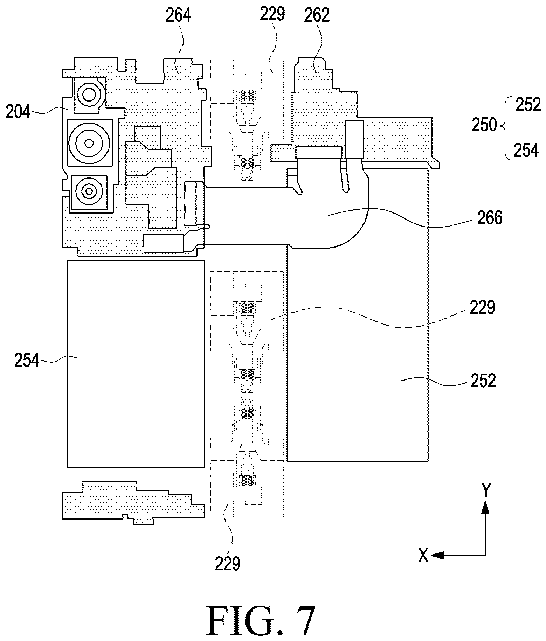

FIG. 4 is an exploded perspective view illustrating an electronic device according to an embodiment of the disclosure. FIG. 5 is a diagram illustrating housings coupled to each other in an electronic device according to an embodiment of the disclosure. FIG. 6 is a diagram illustrating hinge plates disposed in an electronic device according to an embodiment of the disclosure. FIG. 7 is a diagram illustrating arrangement of hinge assembly(assemblies) and electronic components within an electronic device according to an embodiment of the disclosure.

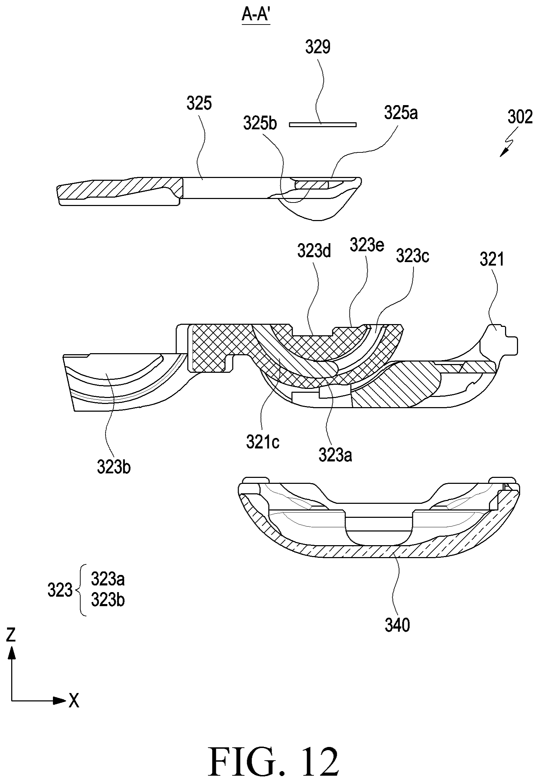

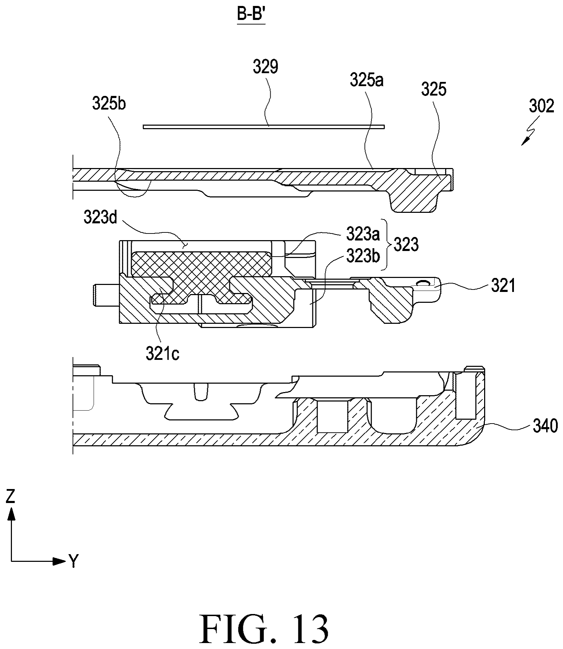

Referring to FIGS. 4 to 7, an electronic device 200 (e.g., the electronic device 101 of FIGS. 1 to 3) may include the housing 201, the display 230, the hinge assembly 202, a battery 250, and the substrate portion 260. For example, the housing 201 may include the first housing 210, the second housing 220, the first rear cover 280, and the second rear cover 290. In an embodiment, the housing 201 may be understood as including the hinge cover 240. In an embodiment, as will be described with reference to the embodiment of FIG. 12 or FIG. 13, the hinge cover 240 may be described as a portion of the hinge assembly 202. The configurations of the first housing 210, the second housing 220, the hinge cover 240, the first rear cover 280, and the second rear cover 290 of FIG. 4 may be wholly or partially the same as the configurations of the first housing 210, the second housing 220, the hinge cover 240, the first rear cover 280, and the second rear cover 290 of FIG. 2 and/or FIG. 3.

According to an embodiment, the first housing 210 and the second housing 220 may be assembled to each other so as to be coupled to both sides of the hinge assembly 202. For example, the hinge assembly 202 may be disposed in a hinge area between the first housing 210 and the second housing 220 and pivotably couple the first housing 210 and the second housing 220. Herein, the 'hinge area' refers to a space where the hinge assembly 202 is disposed, an area at least partially surrounded by the hinge cover 240, and/or a space between the folding area 233 of the display 230 and the hinge cover 240. In an embodiment, the hinge area may be understood as a space disposed to substantially correspond to the folding area 233. For example, in the unfolded state of FIG. 2, the hinge area may be understood as disposed to overlap at least a portion of the folding area 233 in the Z-axis direction.

According to an embodiment, as illustrated in FIGS. 5 to 7, the hinge assembly 202 may include at least one hinge module 229 and a plurality of hinge plates 227. In the illustrated embodiment, three hinge modules 229 may be arranged sequentially along the folding axis(es) A, and a flexible printed circuit board 266 may be disposed to cross the folding axis(es) A through an area between two hinge modules 229. In an embodiment, some of the three hinge modules 229 may be omitted or an additional hinge module may be further disposed, depending on the size of the electronic device 200 to be manufactured.

Although not shown, the hinge module 229 may include a hinge portion providing the folding axis(es) A and an interlocking portion (not shown) interlocking relative movements of the housings 210 and 220. For example, the housing(s) 210 and 220s may be coupled to the hinge module 229 and pivot about the hinge module 229 or the hinge cover 240. The interlocking portion may include, for example, a first gear that rotates on the hinge cover 240 as the first housing 210 pivots and a second gear that rotates on the hinge cover 240 as the second housing 220 pivots. In an embodiment, when the first gear and the second gear mesh with each other, the first housing 210 and the second housing 220 may be configured to pivot in opposite directions relative to each other. For example, when the first housing 210 pivots clockwise on the hinge cover 240, the hinge assembly 202 (e.g., the interlocking portion of the hinge module 229) may pivot the second housing 220 counterclockwise on the hinge cover 240. In an embodiment, a plurality (e.g., one or two pairs) of gears may be further arranged between the first gear and the second gear to interlock pivoting of the first housing 210 and the second housing 220. The number of gears included in the hinge module 229 (e.g., the interlocking portion) may be appropriately selected according to the design specifications of the electronic device, such as the size or shape of an arrangement space.

In an embodiment, the hinge plate(s) 227 may be pivotably coupled to one of the housings 210 and 220. In the unfolded state of FIG. 2, the hinge plates 227 may be aligned to form a continuous plane and support a portion (e.g., the folding area 233 of FIG. 2 or FIG. 4) of the display 230. In the folded state of FIG. 3, the hinge plates 227 may be disposed to be inclined with respect to each other and implement a space for accommodating the folding area 233 deformed into a curved shape.

In an embodiment, when the hinge plates 227 provide the space for accommodating the folding area 233, while being inclined with respect to each other, the folding area 233 may maintain the curved shape within a specified curvature in the folded state. For example, in the folded state of FIG. 3, the folding area 233 may be protected from damage due to excessive folding by having a specified radius of curvature, and the surfaces of the first display area 231 and the second display area 232 may be disposed to form an angle of substantially 0 degrees. The phrase 'disposed to form an angle of 0 degrees' may refer to a state in which as the surface of the first display area 231 and the surface of the second display area 232 are disposed to be substantially parallel to each other (or face each other), the gap between the surface of the first display area 231 and the surface of the second display area 232 is smaller than the radius of curvature of the folding area 233.

According to an embodiment, the first housing 210 may include a first support area 212 (e.g., a first support member) which may support a component (e.g., a first circuit board 262 and/or a first battery 252) of the electronic device 200, and a first sidewall 211 surrounding at least a portion of the first support area 212. The first sidewall 211 may include a first side surface (e.g., the first side surface 210c of FIG. 2) of the electronic device 200. According to an embodiment, the second housing 220 may include a second support area 222 which may support a component (e.g., a second circuit board 264 and/or a second battery 254) and a second sidewall 221 surrounding at least a portion of the second support area 222. The second sidewall 221 may include a second side surface (e.g., the second side surface 220c of FIG. 2) of the electronic device 200.

According to an embodiment, the first sidewall 211 or the second sidewall 221 may be understood as a frame shape which at least partially surrounds the space between the front surface and rear surface of the electronic device 200 (e.g., the first housing 210 or the second housing 220). In an embodiment, the support areas 212 and 222 may be structures that extend from any one of the sidewalls 211 and 221. For example, although the support areas 212 and 222 and the sidewalls 211 and 221 are described separately, for convenience of description, embodiment(s) of the disclosure are not limited thereto, and the support area 212 or 222 and the sidewall 211 or 221 may be implemented as a single body. In an embodiment, the support area 212 or 222 and the sidewall 211 or 221 may be implemented by combining an insulating material and an electrically conductive material, and in this case, the support area 212 or 222 and the sidewall 211 or 221 may be implemented integrally through an insert injection process and/or computer numerical control machining process of the housings 210 and 220. As will be described through an embodiment described below, when including an electrically conductive material, portions of the support areas 212 and 222 and the sidewalls 211 and 221 may function as antenna(s) or radiating conductor(s).

According to an embodiment, a portion of at least one of the housings 210 and 220 in the electronic device 200 may function as an antenna, as mentioned above. In an embodiment, the portion of the electronic device 200 that functions as an antenna may implement the side surface of at least one of the housings 210 and 220. In an embodiment, the portion of the electronic device 200 that functions as an antenna may be disposed adjacent to the side surface of at least one of the housings 210 and 220 and/or oriented in a direction intersecting the Z axis. For example, the portion functioning as an antenna of the electronic device 200 may be implemented by a portion of the housings 210 and 220, or may be manufactured as a separate component from the housings 210 and 220 and disposed adjacent to an edge of the housings 210 and 220. In an embodiment, when it is said that "the portion functioning as an antenna of the electronic device 200 is implemented by a portion of the housings 210 and 220", this may be understood to include, for example, an example in which the portion functioning as an antenna is disposed to form the side surface of at least one of the housings 210 and 220.

According to an embodiment, although not shown, the first housing 210 may include a first waterproof member disposed in the first support area 212, and/or the second housing 220 may include a second waterproof member disposed in the second support area 222. The first waterproof member and/or the second waterproof member may be disposed in the gap between the display 230 and the support area(s) 212 and 222 to suppress moisture or foreign substances from the outside from being introduced into the first housing 210 and/or the second housing 220.

According to an embodiment, the display 230 may include the first display area 231, the second display area 232, and/or the folding area 233. The configurations of the first display area 231, the second display area 232, and the folding area 233 of FIG. 3 may be wholly or partially the same as the configurations of the first display area 231, the second display area 232, and the folding area 233 of FIG. 2.

According to an embodiment, the electronic device 200 may further include the sub-display 234. In an embodiment, the sub-display 234 may display a screen in a different direction from the display areas 231 and 232. For example, the sub-display 234 may output a screen in a direction opposite to the first display area 231. According to an embodiment, the sub-display 234 may be disposed on the first rear cover 280.

According to an embodiment, the electronic device 200 may include a camera assembly 204 (e.g., the camera module 206 of FIG. 2 or FIG. 3) in which a plurality of cameras are combined. Although not shown, the electronic device 200 may further include a camera that captures a subject through a portion (e.g., the first display area 231 or the second display area 232) of the display 230 or a camera that captures a subject through a portion of the sub-display 234. As will be described later, the camera assembly 204 may include a plurality of cameras with different angles of view. For example, a camera having an angle of view of approximately 100 degrees or greater, a camera having an angle of view of approximately 65 to 85 degrees, and/or a camera having an angle of view of approximately 15 to 40 degrees may be included in the camera assembly 204. In an embodiment, an additional camera having an angle of view (e.g., approximately 40 to 60 degrees) other than the ranges of angles of view described above may be included in the camera assembly.

According to an embodiment, the electronic device 200 and/or the second rear cover 290 may include a cover plate 299 disposed to correspond to the camera assembly 204. The cover plate 299 may provide an optical path (e.g., a through hole) corresponding to the camera assembly 204, while allowing the optical path to be in harmony with the exterior of the electronic device 200. To provide an aesthetic appeal to the exterior of the electronic device 200 or to provide a harmonious exterior, the cover plate 299 may include a metal material. For example, the cover plate 299 may be made of a metal material or finished (e.g., printed, deposited, coated, or plated) with a metal material. In an embodiment, the cover plate 299 may be understood as a portion of the second rear cover 290 and have a portion (e.g., an edge) disposed inside the second rear cover 290 and another portion disposed to be exposed to the outside.

According to an embodiment, the battery 250 may include the first battery 252 disposed inside the first housing 210 and the second battery 254 disposed inside the second housing 220. According to an embodiment, the first battery 252 may be connected to the first circuit board 262, and the second battery 254 may be connected to the second circuit board 264. According to an embodiment, the battery 250 may supply power to at least one component of the electronic device 200. According to an embodiment, the battery 250 may include, for example, a nonrechargeable primary battery, a rechargeable secondary battery, or a fuel cell.

According to an embodiment, the substrate portion 260 may include the first circuit board 262 disposed within the first housing 210 and the second circuit board 264 disposed within the second housing 220. According to an embodiment, the first circuit board 262 and the second circuit board 264 may be electrically connected to each other by at least one flexible printed circuit board 266. According to an embodiment, at least a portion of the flexible printed circuit board 266 may be disposed across the hinge area or the hinge structure (e.g., the hinge assembly 202). According to an embodiment, the first circuit board 262 and the second circuit board 264 may be disposed inside a space formed by the first housing 210, the second housing 220, the first rear cover 280, and the second rear cover 290. Components for implementing various functions of the electronic device 200 may be disposed on the first circuit board 262 and the second circuit board 264.

According to an embodiment, the electronic device 200 may include speakers 208a and 208b. According to an embodiment, the speakers 208a and 208b may convert an electric signal into sound. According to an embodiment, the speakers 208a and 208b may be disposed inside the space formed by the first housing 210, the second housing 220, the first rear cover 280, and the second rear cover 290. According to an embodiment, the speakers 208a and 208b may include an upper speaker 208a located in an upper part (+Y direction) of the electronic device 200 and a lower speaker 208b located in a lower part (-Y direction) of the electronic device 100. In the disclosure, although the speakers 208a and 208b are shown as located within one housing (e.g., the first housing 210 of FIG. 4), this is an optional structure. For example, the speakers 208a and 208b may be located within at least one of the first housing 210 or the second housing 220. The configurations of the speakers 208a and 208b of FIG. 4 may be wholly or partially the same as the configuration of the sound output module 155 of FIG. 1.

According to an embodiment, the electronic device 200 may include a rear member 270 (or a rear case). According to an embodiment, the rear member 270 may be disposed within the housing 201 (e.g., the second housing 220). According to an embodiment, the rear member 270 may accommodate at least one antenna 275. In an embodiment, the rear member 270 may function as a structure for disposing the antenna 275 thereon and function as a structure for supporting or protecting one of the circuit boards 262 and 264. For example, a portion of the rear member 270 indicated by reference numeral '279' may support a portion of the circuit boards 262 and 264.

According to an embodiment, the electronic device 200 may include the antenna 275. Antennas 275a and 275b may include, for example, an ultra wide band (UWB) antenna 275a, a near field communication (NFC) antenna, a wireless charging antenna, and/or a magnetic secure transmission (MST) antenna 275b. The antenna 275 may, for example, perform short-range communication with an external device or wirelessly transmit and receive power required for charging.

In an embodiment, an antenna structure may be formed by portions of the housing 201 or a combination thereof. For example, the antenna 275 may include a communication antenna 275c which is at least partially exposed to the outside of the electronic device 200 and forms at least a portion of the exterior of the electronic device 200. The communication antenna 275c may be used for communication (e.g., Wi-Fi) with an external electronic device. For example, the communication antenna 275c may be located in an upper part 271a or a lower part 271b of the rear member 270. In addition, the electronic device 200 may further include an additional antenna disposed adjacent to a portion of the sidewalls 211 and 221 or an electronic component such as the camera assembly 204.

In the following detailed description, the housing may be described as including the first housing 210 and the second housing 220 rotatably coupled by the hinge structure (e.g., the hinge assembly 202). However, it should be noted that this embodiment does not limit the electronic device according to various embodiments of the disclosure. For example, the electronic device according to embodiment(s) of the disclosure may include three or more housings, and "a pair of housings (e.g., the first housing 210 and the second housing 220)" in the embodiment disclosed below may refer to "two housings that are rotatably coupled to each other among the three or more housings." In an embodiment, the configuration of the electronic device 101 of FIG. 1 may all be included in either the first housing 210 or the second housing 220 described above, and in this case, either the first housing 210 or the second housing 220 itself may be understood as an embodiment of the electronic device. For example, it should be noted that the electronic device according to embodiment(s) of the disclosure is not limited by the number of housing(s) or a coupling structure implemented between a plurality of housings.

In the embodiment described below, the same reference numerals or no reference numerals may be assigned to redundant components or components that may be easily understood from the preceding embodiments, and a detailed description thereof may be omitted. A component which is assigned a reference numeral in a drawing but is not mentioned in the detailed description of the drawing will be easily understood by those skilled in the art from the detailed description of the disclosure.

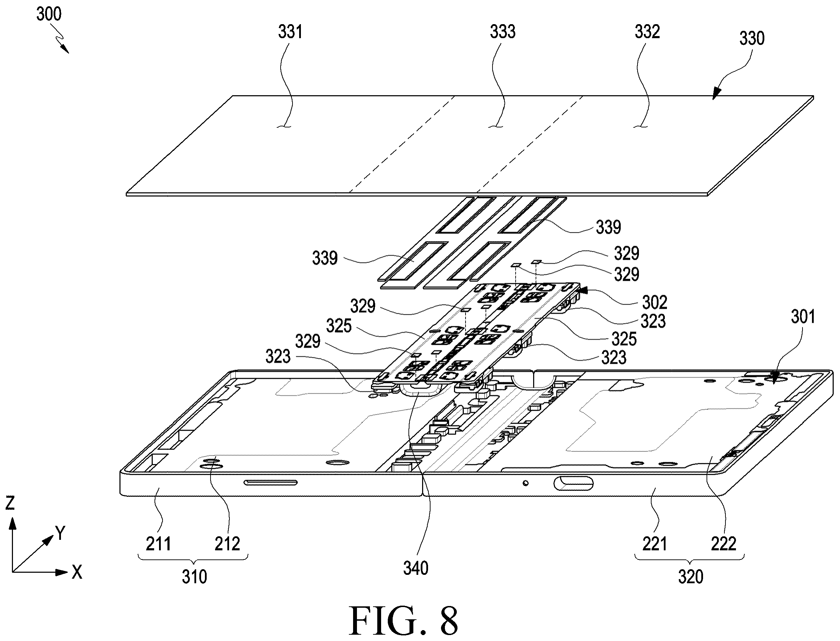

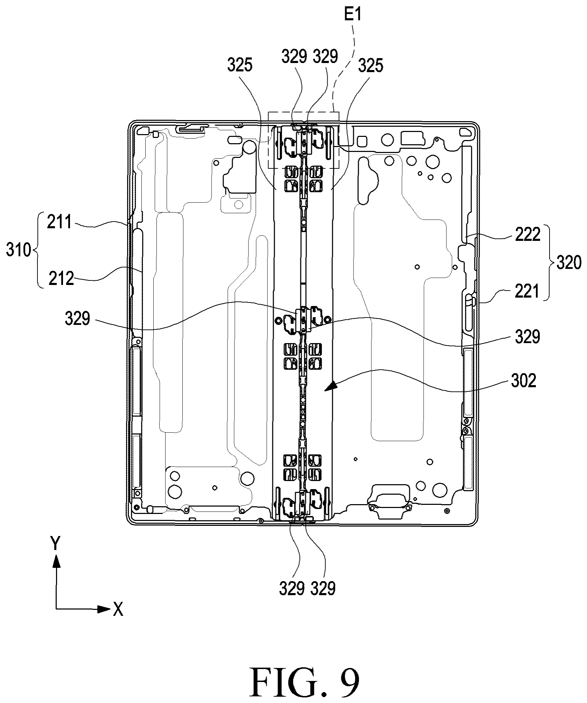

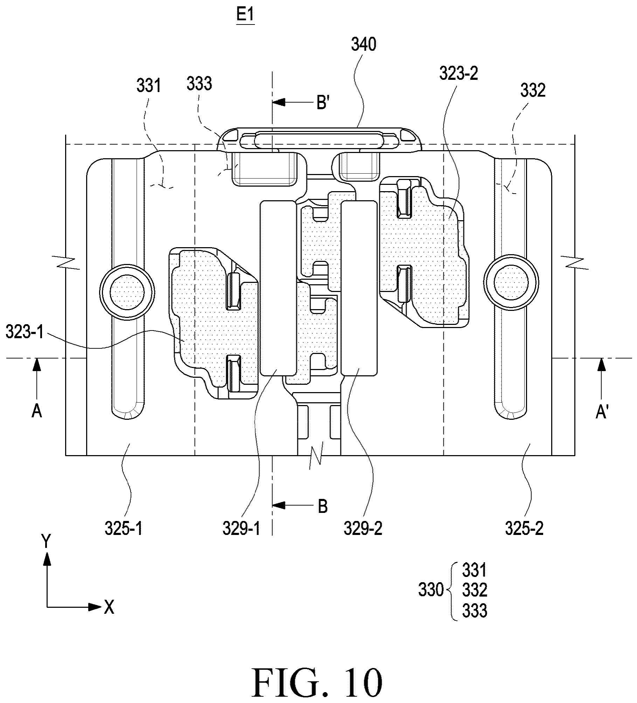

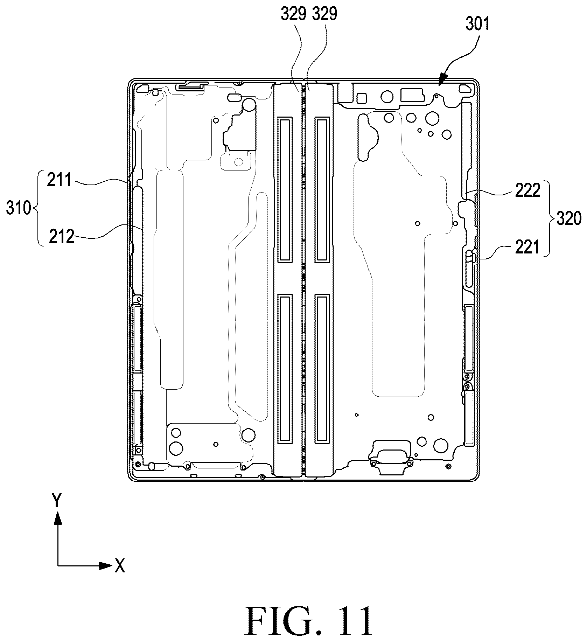

FIG. 8 is an exploded perspective view illustrating an electronic device according to an embodiment of the disclosure. FIG. 9 is a plan view illustrating a hinge assembly disposed on housing(s) in an electronic device according to an embodiment of the disclosure. FIG. 10 is an enlarged view illustrating a part 'E1' of FIG. 9 in an electronic device according to an embodiment of the disclosure. FIG. 11 is a plan view illustrating a third protection member disposed on housing(s) in an electronic device according to an embodiment of the disclosure.

The configuration of an electronic device 300 of FIG. 8 may be wholly or partially the same as, for example, the configuration of the electronic devices 101 and 200 of FIGS. 1 to 4. Accordingly, the configuration of the electronic device 300 of FIG. 8 may be partially replaced by the configurations of the electronic devices 101 and 200 of FIGS. 1 to 4 or selectively combined with the configurations of the electronic devices 101 and 200 of FIGS. 1 to 4. The configuration of a hinge assembly 302 in the embodiment described below may be wholly or partially the same as, for example, the configuration of the hinge assembly 202 of FIG. 4, and include a plurality of rotation members 323, a plurality of hinge plates 325, and/or a plurality of protection members 329 and 339 corresponding to a first housing 310 (e.g., the first housing 210 of FIG. 4) and a second housing 320 (e.g., the second housing 220 of FIG. 4). It may be understood that the plurality of rotation members 323, the plurality of hinge plates 325, and/or the plurality of protection members 329 and 339 are disposed substantially symmetrically with respect to each other on a housing 301, and when needed, the plurality of rotation members 323, the plurality of hinge plates 325, and/or the plurality of protection members 329 may be distinguished by ordinal numbers such as 'first' or 'second' with reference to FIG. 10. For example, a plurality of rotation members may be referred to simply as a 'rotation member', and a rotation member corresponding to the first housing among the plurality of rotation members 323 may be referred to as a 'first rotation member 323-1'.

Referring to FIGS. 8 to 11, the electronic device 300 may include the housing 301 configured to form the exterior of the electronic device 300, a flexible display 330 configured to output a screen, and/or the hinge assembly 302 configured to provide at least one folding axis (e.g., the folding axis A of FIG. 4). The housing 301 may include, for example, the first housing 310 and the second housing 320, and the hinge assembly 302 may be configured to rotatably (pivotably) couple the first housing 310 and the second housing 320. In an embodiment, the flexible display 330 may be disposed from the first housing 310 across the hinge assembly 302 to the second housing 320. In an embodiment, as the first housing 310 and the second housing 320 rotate about the hinge assembly 302 or the folding axis(es) A of FIG. 4, the housing 301 may be deformed (or displaced) between the unfolded state of FIG. 2 and the folded state of FIG. 3.

According to an embodiment, the flexible display 330 (e.g., a folding area 333) may be deformed into a flat shape or a curved shape according to the deformation of the housing 301. For example, in the unfolded state of 2, the folding area 333 may have a substantially flat shape and be aligned to form a continuous plane with a first display area 331 and/or a second display area 332. In an embodiment, in an operation of deformation into the folded state of FIG. 3 or in the folded state of FIG. 3, the first display area 331 and the second display area 332 may be moved or displaced to be inclined with respect to each other, while the folding area 333 is deformed into a curved shape. When the folded state of FIG. 3 is reached, the first display area 331 and the second display area 332 may be aligned to be inclined at an angle of approximately 10 degrees or less with respect to each other or to be substantially parallel to each other. In an embodiment, although the first display area 331 and the second display area 332 may be deformed into a curved shape similarly to the folding area 333, they may be supported by the support areas 212 and 222 and thus maintain a substantially flat shape.

According to an embodiment, the electronic device 300 and/or the hinge assembly 302 may stably support the flexible display 330 (e.g., the folding area 333) in the unfolded state by including the protection member(s) 329 and 339. For example, the electronic device 300 and/or the hinge assembly 302 may include first protection member(s) 329-1 and second protection member(s) 329-2 disposed on portions of the hinge assembly 302, and/or third protection member(s) 339 disposed to correspond to at least a portion (substantially the entire area) of the hinge assembly 302. The protection member(s) 329 and 339 may, for example, guide or support deformation of the folding area 333, and inhibit deformation of the flexible display 330 due to an external force in the unfolded state. For example, the first protection member(s) 329-1 and the second protection member(s) 329-2 may be understood as disposed between the folding area 333 and a hinge cover 340. Herein, the term 'external force' may refer to, for example, a force applied to the folding area 333 or the flexible display 330 by a user's contact (e.g., a touch input). In the illustrated embodiment, the third protection member(s) 339 may be understood as disposed between the hinge plate 325 and the flexible display 330 (e.g., the folding area 333), in a sheet shape corresponding to the shape of the hinge assembly 302, when viewed from the front. However, it should be noted that the embodiment(s) of the disclosure are not limited thereto. For example, the third protection member(s) 339 may be provided in a size or shape corresponding to the entire area of the flexible display 330.

According to an embodiment, in the unfolded state (e.g., the folding area 333 has a flat shape), the first protection member(s) 329-1 and the second protection member(s) 329-2 may be disposed each parallel to one side of the other. In an embodiment, in the folded state, the first protection member(s) 329-1 and the second protection member(s) 329-2 may be aligned to face each other with at least a portion of the folding area 333 therebetween. In an embodiment, to stably support the folding area 333 in the unfolded state, the gap between the first protection member(s) 329-1 and the second protection member(s) 329-2 may be appropriately selected. For example, as the gap between the first protection member(s) 329-1 and the second protection member(s) 329-2 is smaller in the unfolded state, the support structure of the folding area 333 may be implemented more stably.

According to an embodiment, the first protection member(s) 329-1 and/or the second protection member(s) 329-2 may include a sponge material, a synthetic resin material (e.g., polycarbonate (PC) or polyethylene terephthalate (PET)), or a metal material. In an embodiment, the first protection member(s) 329-1 and/or the second protection member(s) 329-2 may be formed of a metal material having a lower density, hardness, or elastic modulus than that of the rotation member 323 and/or the hinge plate 325. For example, on the hinge assembly 302, the first protection member(s) 329-1 and/or the second protection member(s) 329-2 may be disposed in direct contact with the third protection member(s) 339 and/or the flexible display 330 (e.g., the folding area 333). In an embodiment, as the first protection member(s) 329-1 and/or the second protection member(s) 329-2 are in direct contact with the third protection member(s) 339 and/or the flexible display 330 (e.g., the folding area 333), they may accumulate an elastic force while being at least partially compressed or contracted.

According to an embodiment, the hinge assembly 302 may include the hinge cover 340, the rotation member(s) 323, and/or the hinge plate(s) 325. In an embodiment, it may be understood that the first protection member(s) 329-1 and/or the second protection member(s) 329-2 are included in the hinge assembly 302. The configuration of the hinge assembly 302 will be described in more detail with reference to FIGS. 12 to 14. Referring to FIG. 8, the hinge cover 340 may be accommodated in a space implemented by a combination of the first housing 310 and the second housing 320, and partially exposed to an external space in the folded state of FIG. 3. For example, the hinge cover 340 may be understood as a portion of the housing 301.

In an embodiment, the rotation member(s) 323 may be rotatably disposed on the hinge cover 340 and coupled to either the first housing 310 or the second housing 320 by the hinge plate(s) 325. The hinge plate(s) 325 may be substantially fixed to the rotation member(s) 323, and a portion of the hinge plate(s) 325 may be disposed in either the first housing 310 or the second housing 320. For example, the hinge plate(s) 325 may function as a structure that connects (or couples) the rotation member(s) 323 to either the first housing 310 or the second housing 320. In an embodiment, as mentioned in the embodiment of FIG. 4, the hinge plates 325 may be disposed to be inclined to each other in the folded state, thereby providing a space for accommodating the folding area 333 deformed into a curved shape therein.

In an embodiment, the configurations of the support area(s) 212 and 222 and the sidewall(s) 211 and 221 of the first housing 310 and/or the second housing 320 may be substantially the same as the embodiment of FIG. 4. In an embodiment, in the unfolded state, the hinge plate(s) 325 may be disposed on substantially the same plane as the support area(s) 212 and 222, thereby supporting the flexible display 330 in a flat shape, together with the support area(s) 212 and 222. In an embodiment, in the folded state, the hinge plate(s) 325 may be disposed to be inclined with respect to each another and/or with respect to the support area(s) 212 and 222. In an embodiment, in the folded state, the hinge plate(s) 325 may be disposed to be inclined with respect to each other, such that the first support area 212 and a first hinge plate 325-1 are aligned to form a continuous plane, and the second support area 222 and a second hinge plate 325-2 are aligned to form a continuous plane. In an embodiment, when the first support area 212 and the first hinge plate 325-1 (or the second support area 222 and the second hinge plate 325-2) are aligned to form a continuous plane even in the folded state, the hinge plate(s) 325 may be understood as being fixed to either the first housing 310 or the second housing 320.

Hereinbelow, the hinge assembly 302 will be described in more detail with reference to FIGS. 12 to 17. In describing the following embodiment(s), the same reference numerals or no reference numerals may be assigned to components that may be easily understood from the preceding embodiments, and a detailed description thereof may also be omitted. For components omitted in FIGS. 12 to 17 and/or a detailed description given with reference to FIGS. 12 to 17, the preceding embodiments may be referred to.

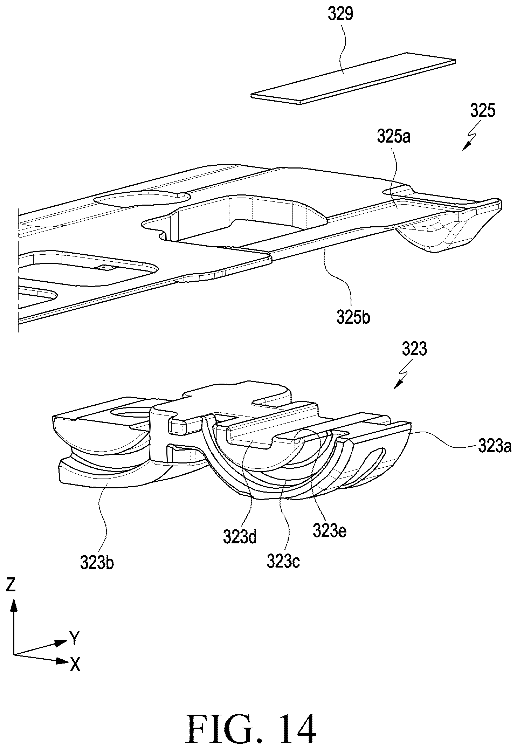

FIG. 12 is an exploded view illustrating a hinge assembly in an electronic device according to an embodiment of the disclosure, taken along line A-A' of FIG. 10. FIG. 13 is an exploded view illustrating a hinge assembly in an electronic device according to an embodiment of the disclosure, taken along line B-B' of FIG. 10. FIG. 14 is an exploded perspective view illustrating a protection member disposed in an electronic device or hinge assembly according to an embodiment of the disclosure.

Referring to FIGS. 12 to 14, the hinge assembly 302 may include a hinge bracket 321, the rotation member(s) 323, the hinge plate(s) 325, and/or the protection member(s) 329. In an embodiment, as the hinge assembly 302 provides at least one folding axis (e.g., the folding axis A of FIG. 4), the first housing 310 and the second housing 320 may be connected (or coupled) to each other by the hinge assembly 302 and rotate about the at least one folding axis A. In an embodiment, a plurality of rotation members 323 may be rotatably coupled to one hinge bracket 321. In an embodiment, the plurality of rotation members 323 may rotate about different rotation axes on the hinge bracket 321.

In an embodiment, it may be understood that when the plurality of rotation members 323 rotate about different rotation axes on the hinge bracket 321, the hinge assembly 302 provides a plurality of folding axes A. In an embodiment, the plurality of folding axes A may be substantially parallel to each other. In an embodiment, when one of the plurality of rotation members 323 is connected to the first housing 310 by one of the hinge plates 325, another one of the plurality of rotation members 323 may be connected to the second housing 320 by another one of the hinge plates 325. For example, the first housing 310 and the second housing 320 may rotate about different folding axes A with respect to the hinge bracket 321 (or the hinge cover 340).

In an embodiment, the hinge bracket 321 may be disposed on the hinge cover 340. For example, the hinge bracket 321 may be disposed or fixed on an inner surface of the hinge cover 340. In an embodiment, a plurality of hinge brackets 321 may be arranged at a specified interval along the Y-axis direction. In an embodiment, the hinge bracket 321 may include a guide rail 321c. The guide rail 321c may be, for example, an arc trajectory having a specified radius centered on at least one folding axis (e.g., the folding axis A of FIG. 4). In the illustrated embodiment, the guide rail 321c may be a shape that protrudes along the Y-axis direction into an inner space of the hinge bracket 321, and may be understood to extend along an arc trajectory on an XZ plane.

According to an embodiment, the rotation member 323 may include a rotating body 323a that is rotatably coupled to the hinge bracket 321 and configured to rotate about the at least one folding axis (e.g., the folding axis A of FIG. 4). The rotation member 323 may provide at least one guide groove 323c on a surface facing the Y-axis direction, for example. In the illustrated embodiment, the guide groove 323c may be understood as provided on the rotating body 323a on each of a surface facing the +Y direction and a surface facing the -Y direction. In an embodiment, the rotation member 323 or the rotating body 323a may be coupled to the hinge bracket 321 in a state where the guide groove 323c accommodates the guide rail 321c. For example, the guide groove 323c may be understood as having a shape recessed into one surface of the rotating body 323a along the Y-axis direction and extending along an arc trajectory on the XZ plane.

According to an embodiment, the radius of the trajectory of the guide groove 323c may be substantially the same as the radius of the trajectory of the guide rail 321c. For example, the rotation member 323 or the rotating body 323a may rotate on the hinge bracket 321 while being guided by the guide groove 323c and the guide rail 321c. In an embodiment, it may be understood that the radial center of the trajectory of the guide groove 323c (or the radial center of the trajectory of the guide rail 321c) is substantially located on the at least one folding axis (e.g., the folding axis A of FIG. 4). In an embodiment, when a plurality of rotation members 323 are coupled to one hinge bracket 321, the hinge bracket 321 may provide at least two pairs of guide rails 321c. In an embodiment, when the hinge assembly 302 is structured to provide a plurality of folding axes A, it may be understood that the radial center of one pair of the two pairs of guide rails 321c is disposed on a first folding axis, and the radial center of the other pair of the two pairs of guide rails 321c is disposed on a second folding axis.

According to an embodiment, the rotation member 323 may further include a support body 323b extending from the rotating body 323a. The support body 323b may function, for example, as a structure that more firmly connects the hinge plate 325 and the rotation member 323. In an embodiment, when the first housing 310 and the second housing 320 are unfolded substantially at an angle of 180 degrees, the support body 323b may interfere with the hinge bracket 321, thereby suppressing the first housing 310 and the second housing 320 from being unfolded at an angle exceeding 180 degrees. In an embodiment, when the hinge plate(s) 325 are structured to be aligned to be inclined with respect to each other (or with respect to the support area(s) 212 and 222) in the folded state of FIG. 3, the support body 323b may be rotatably coupled to either the first housing 310 or the second housing 320. For example, a guide structure similar to the guide rail 321c and the guide groove 323c may be provided between the support body 323b and the first housing 310 (or the second housing 320).

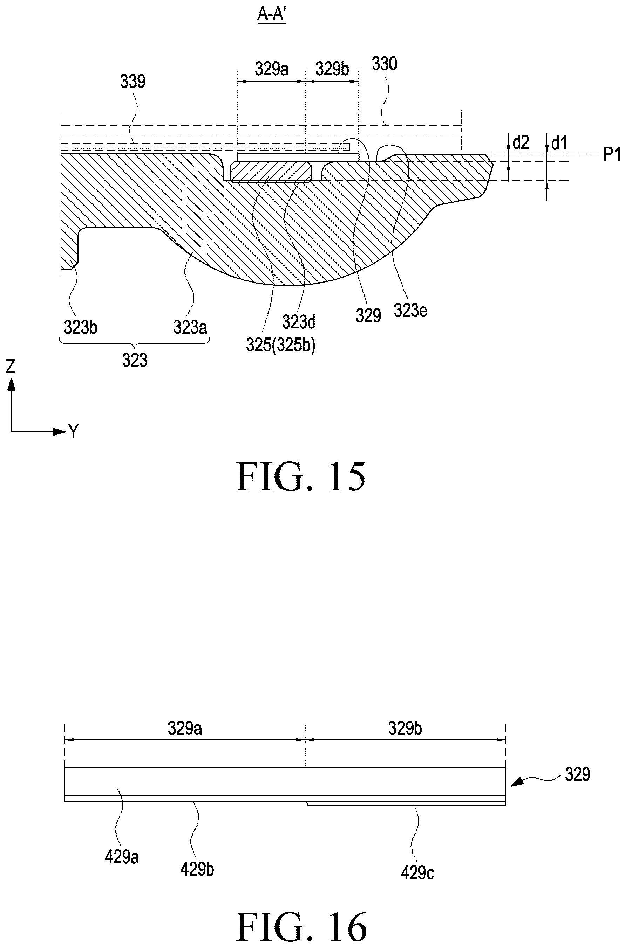

According to an embodiment, the rotation member 323 may further include a first seating groove 323d and/or a second seating groove 323e. Referring further to FIG. 15, the first seating groove 323d may be formed, for example, in a first depth d1 on a surface of the rotating body 323a to accommodate a portion (e.g., a seating portion 325b) of the hinge plate 325, and a portion (e.g., a first portion 329a of FIG. 16) of the protection member 329 may be at least partially disposed in the first seating groove 323d. In an embodiment, the second seating groove 323e may be formed in a second depth d2 on the surface of the rotating body 323a and disposed substantially in contact with the first seating groove 323d. In an embodiment, the second depth d2 may be smaller than the first depth d1. For example, it may be understood that the first seating groove 323d is more recessed from the bottom of the second seating groove 323e.

According to an embodiment, the hinge plate 325 may extend in the Y-axis direction and have a shape corresponding to a portion of the folding area 333 in the X-axis direction. In an embodiment, the hinge assembly 302 may support substantially the entire area of the folding area 333 by including a pair of hinge plates 325. For example, a half of the folding area 333 may be supported by a first hinge plate (e.g., the first hinge plate 325-1 of FIG. 10) disposed on the first housing 310, and the other half of the folding area 333 may be supported by a second hinge plate (e.g., the second hinge plate 325-2 of FIG. 10) disposed on the second housing 320.

In an embodiment, the hinge plate 325 may be substantially disposed or fixed on the rotation member 323 on the support body 323b, and a portion (e.g., the seating portion 325b) thereof may be disposed on the rotating body 323a (e.g., the first seating groove 323d). In an embodiment, it may be understood that as the seating portion 325b is disposed or fixed on the rotating body 323a, the hinge plate 325 is disposed or fixed on the rotation member 323 and the support body 323b supports a portion of the hinge plate 325. In an embodiment, the seating portion 325b may have a smaller thickness than the remainder of the hinge plate 325. In an embodiment, the support body 323b of the rotation member 323 may provide a lower surface than the rotating body 323a, and when the bottom surface of the hinge plate 325 is disposed to face the support body 323b, the top surface of the hinge plate 325 may be disposed on substantially the same plane (e.g., a plane indicated by 'P1' in FIG. 15) as the surface of the rotating body 323a.

According to an embodiment, when the hinge plate 325 is disposed on the rotation member 323 and/or the support body 323b, the seating portion 325b may be disposed substantially in the first seating groove 323d. For example, the height difference between the support body 323b and the rotating body 323a and/or the first seating groove 323d may function as a structure that guides assembly of the hinge plate 325 and the rotation member 323 (or implements a firm connection state). In an embodiment, the depth difference between the first seating groove 323d and the second seating groove 323e may be substantially equal to the thickness of the seating portion 325b.

According to an embodiment, the top surface of the hinge plate 325 and/or the surface of the rotating body 323a aligned on the same plane as the top surface thereof may be disposed to face, for example, the flexible display 330 (e.g., the folding area 333). For example, the top surface of the hinge plate 325 and/or the surface of the rotating body 323a aligned on the same plane as the top surface thereof may be provided as a surface supporting the folding area 330. As mentioned above, when a manufacturing tolerance or assembly tolerance exists, a step or height difference may occur between the top surface of the hinge plate 325 and the surface of the rotating body 323a in the area supporting the folding area 333. This step or height difference may form a curve on the surface of the flexible display 330 (e.g., the folding area 333), thereby causing, for example, deterioration of the emotional quality perceived by the user or damage to the folding area 333. According to embodiment(s) of the disclosure, the electronic device 300 and/or the hinge assembly 302 may suppress the deterioration of the emotional quality or damage to the folding area 333 due to the step or height difference by including the protection member 329 and/or a receiving groove 325a.

According to an embodiment, the receiving groove 325a may be a shape recessed in a specified depth from the surface of the hinge plate 325, and may be located at least partially in the seating portion 325b. For example, the receiving groove 325a may be provided on the hinge plate 325 in an area that at least partially overlaps with the rotating body 323a and/or the first seating groove 323d. In an embodiment, when the thickness of the seating portion 325b is provided to correspond to the depth difference between the first seating groove 323d and the second seating groove 323e, the depth of the receiving groove 325a may be provided to correspond to the depth of the second seating groove 323e. For example, when the hinge plate 325 is coupled to the rotation member 323, the bottom surface of the receiving groove 325a and the bottom surface of the second seating groove 323e may be aligned on substantially the same plane.

According to an embodiment, the receiving groove 325a and/or the second seating groove 323e is provided on a portion of the surface (e.g., the plane indicated by 'P1' in FIG. 15) that supports the flexible display 330 (e.g., the folding area 333), and even if there is a height difference at the boundary between the hinge plate 325 and the rotating body 323a, the deviation of a force supporting the folding area 333 may be suppressed. For example, even if there is a manufacturing tolerance (or assembly tolerance) of the seating portion 325b and the rotating body 323a, the area where the receiving groove 325a and/or the second seating groove 323e is provided may be lower than the remaining surface of the hinge plate 325 and/or the remaining surface of the rotating body 323a. Accordingly, even if there is a manufacturing tolerance (or assembly tolerance) of the seating portion 325b and the rotating body 323a, the flexible display 330 (e.g., the folding area 333) may maintain a flat shape in the unfolded state, and damage to the flexible display 330 that may occur from repeated deformation may be suppressed while securing the emotional quality perceived by the user.

According to an embodiment, in a structure where the hinge plate 325 (e.g., the seating portion 325b) and the rotating body 323a do not substantially support the folding area 333 in the area where the receiving groove 325a and/or the second seating groove 323e is provided, partial deformation may occur when an external force is applied to the folding area 333. For example, when a user's touch input is performed in the area where the receiving groove 325a and/or the second seating groove 323e is provided, the folding area 333 may be deformed, causing a feeling of anxiety or discomfort to the user. According to an embodiment of the disclosure, the protection member 329 (e.g., the first protection member 329-1 and/or the second protection member 329-2 of FIG. 10) is provided in the receiving groove 325a and/or the second seating groove 323e, thereby inhibiting deformation of the flexible display 330 (e.g., the folding area 333(, even when an external force is applied. For example, the hinge assembly 302 may inhibit deterioration of the emotional quality or deterioration of the reliability due to local deformation of the folding area 333 by including the protection member 329.

In an embodiment, the protection member 329 may support the flexible display 330 (e.g., the folding area 333) in the area where the receiving groove 325a and/or the second seating groove 323e is disposed, by having a portion (e.g., the first portion 329a of FIG. 16) disposed in the receiving groove 325a and another portion (e.g., the second portion 329b of FIG. 16) disposed on the rotation member 323 (e.g., the rotating body 323a). In an embodiment, the second portion 329b of the protection member 329 may extend from one side of the first portion 329a of the protection member 329 and be disposed on the rotating body 323a (e.g., the second seating groove 323e) in the outside of the hinge plate 325. When it is said that 'the protection member 329 supports the folding area 333', this may refer to inhibiting deformation of the flexible display 330 due to a user contact in the unfolded state of FIG. 2. In an embodiment, when it is said that 'the protection member 329 supports the folding area 333', this may mean that when the hinge plate 325 and the rotating body 323a are combined to provide an area supporting a portion (e.g., the folding area 333) of the flexible display 330, the protection member 329 is provided as a portion of this support area. In an embodiment, it may be understood that the protection member 329 is disposed across the boundary between the hinge plate 325 and the rotating body 323a on the plane (e.g., the plane indicated by 'P1' in FIG. 15) implemented by combining the hinge plate 325 and the rotating body 323a.

According to an embodiment, a portion of the surface of the protection member 329 on the hinge assembly 302 may be disposed to form a continuous plane (or a continuous curved surface) with the surface of the rotating body 323a or the surface of the hinge plate 325. In an embodiment, the protection member 329 may be understood as a structure that maintains the flexible display 330 in a specified shape (e.g., a flat plate shape) in combination with the rotating body 323a or the hinge plate 325. For example, a portion of the surface of the protection member 329 may be disposed to face the flexible display 330 together with the surface of the rotating body 323a or the surface of the hinge plate 325. In an embodiment, when it is said that "a portion of the surface of the protection member 329 is disposed to form a continuous plane (or a continuous curved surface) with the surface of the rotating body 323a or the surface of the hinge plate 325", this may refer to the arrangement or shape of the protection member 329 when the flexible display 330 (or the third protection member 339 of FIG. 8) is assembled on the first housing 310, the second housing 320, and/or the hinge assembly 302. In an embodiment, when it is said that 'a portion of the surface of the protection member 329 is disposed to form a continuous plane with the surface of the rotating body 323a or the surface of the hinge plate 325', this may refer to the arrangement or shape of the protection member 329 when the first housing 310 and the second housing 320 are unfolded to form substantially an angle of 180 degrees with respect to each other. In an embodiment, a portion of the surface of the hinge plate 325 that forms a continuous plane with the surface of the protection member 329 may refer to, for example, a surface of a portion where the receiving groove 325a is not provided. In an embodiment, the portion of the surface of the rotation member 323 (e.g., the rotating body 323a) that forms a continuous plane with the surface of the protection member 329 may refer to, for example, a surface of a portion where the first seating groove 323d and/or the second seating groove 323e is not provided.

In an embodiment, as mentioned above, the protection member 329 may have a lower density, hardness, or elastic modulus than the rotation member 323 and/or the hinge plate 325. For example, the protection member 329 may include a sponge material, a synthetic resin material such as PC or PET, and/or a metal material. In an embodiment, when the protection member 329 is disposed on the hinge plate 325 and/or the rotating body 323a (e.g., when the third protection member 339 and/or the flexible display 330 is not disposed), the protection member 329 may protrude from the surface of the hinge plate 325 and/or the surface of the rotating body 323a. In an embodiment, when the third protection member 339 and/or the flexible display 330 is disposed on the hinge assembly 302, the protection member 329 may accumulate an elastic force while being compressed (or contracted), and at least a portion of the surface of the protection member 329 may be aligned on the same plane as the surface of the hinge plate 325 and/or the surface of the rotating body 323a. The arrangement of the protection member 329 or a support structure provided by the protection member 329 will be further described with reference to FIGS. 15 to 17.

FIG. 15 is a diagram illustrating a protection member disposed in an electronic device or hinge assembly according to an embodiment of the disclosure, taken along line A-A' of FIG. 10.

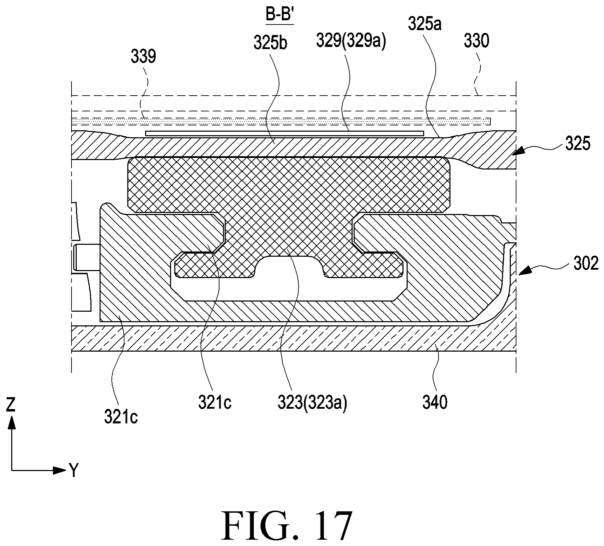

FIG. 16 is a diagram illustrating a protection member in an electronic device or hinge assembly according to an embodiment of the disclosure. FIG. 17 is a diagram illustrating a protection member disposed in an electronic device or hinge assembly according to an embodiment of the disclosure, taken along line B-B' of FIG. 10.

Referring to FIGS. 15 to 17, in a state in which a portion (e.g., the seating portion 325b) of the hinge plate 325 is disposed in the first seating groove 323d, the first portion 329a of the protection member 329 may be disposed on the hinge plate 325 (e.g., the receiving groove 325a of FIG. 14) and the second portion 329b of the protection member 329 may be disposed in the second seating groove 323e. In an embodiment, the thickness of the seating portion 325b of the hinge plate 325 may correspond to the difference between the first depth d1 and the second depth d2, and the thickness of the protection member 329 may correspond to the depth of the receiving groove 325a and/or the depth of the second seating groove 323e. For example, when disposed on the hinge plate 325 and/or the rotation member 323 (e.g., the rotating body 323a), at least a portion of the surface of the protection member 329 may be aligned with a portion of the surface of the rotating body 323a (or a portion of the surface of the hinge plate 325) on the plane indicated by 'P1'. However, the embodiment(s) of the disclosure are not limited thereto, and it may be understood that when the third protection member 339 and/or the flexible display 330 is disposed on the hinge assembly 302, the protection member 329 is compressed, and a portion of the surface of the protection member 329 is aligned with the plane indicated by 'P1'. In an embodiment, when the protection member 329 has a smaller elastic modulus than the hinge plate 325 and/or the rotation member 323 (e.g., the rotating body 323a), even if there is a manufacturing tolerance (or assembly tolerance) in the thickness of the seating portion 325b and the depth d1 or d2 of the first seating groove 323d (or the second seating groove 323e), the surface supporting the flexible display 330 (e.g., the folding area 333 of FIG. 10) on the hinge assembly 302 may be implemented as a substantially flat surface.

According to an embodiment, the protection member 329 may include a body 429a made of a sponge material, a synthetic resin material, and/or a metal material, and may further include an adhesive layer 429b provided on one surface thereof and/or a cover film 429c provided on a partial surface of the adhesive layer 429b. In an embodiment, the protection member 329 (e.g., the body 429a) may be attached to the hinge plate 325 (e.g., the seating portion 325b) and/or the rotating body 323a (e.g., the second seating groove 323d) by the adhesive layer 429b. In an embodiment, when the hinge plate 325 and the rotating body 323a are made of different materials, there may be a difference between the adhesive strength of the adhesive layer 429b to the hinge plate 325 and the adhesive strength of the adhesive layer 429b to the rotating body 323a. When there is a difference in the adhesive strength, the protection member 329 may be separated from or reattached to either the hinge plate 325 or the rotating body 323a. The separation/reattachment phenomenon of the adhesive layer 429b may cause noise during use of the electronic device (e.g., the electronic device 101, 200, or 300 of FIGS. 1 to 4 or FIG. 8) or during deformation of the housing 201 or 301.

According to an embodiment, the cover film 429c may be provided on the second portion 329b. In an embodiment, the cover film 429c may be understood as a portion of the second portion 329b. For example, the protection member 329 may be directly attached to the hinge plate 325 (e.g., the seating portion 325b) in the first portion 329a, and the second portion 329b (or a portion of the adhesive layer 429b) may be disposed to face the rotating body 323a (e.g., the bottom of the second seating groove 323d) with the cover film 429c interposed therebetween. The cover film 429c may be disposed to block the adhesive layer 429c (or the protection member 329) from being attached to the rotating body 323a in the second portion 329b, and to be in contact with the rotating body 323a. For example, the protection member 329 may be directly attached to the hinge plate 325 in the first portion 329a, and disposed to be in contact with the rotating body 323a without being attached to it in the second portion 329b. Accordingly, even if there is a difference in the adhesive strength due to a difference in the materials of the hinge plate 325 and the rotating body 323c, the protection member 329 may not be directly attached to the rotating body 323a, thereby suppressing noise generation. In an embodiment, when a structure is implemented in which the adhesive layer 429b is provided on the first portion 329a and not provided on the second portion 329b, the cover film 429c may be omitted.

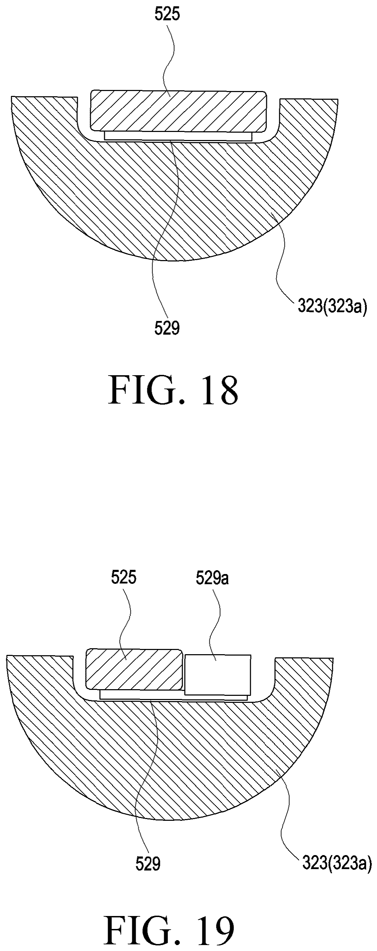

FIG. 18 is a diagram illustrating a protection member disposed in an electronic device or hinge assembly according to an embodiment of the disclosure. FIG. 19 is a diagram illustrating a protection member disposed in an electronic device or hinge assembly according to an embodiment of the disclosure.

Referring to FIG. 18, the electronic device 300 and/or the hinge assembly 302 may further include a fourth protection member 529 disposed between a hinge plate 525 (e.g., the hinge plate 325 of FIGS. 12 to 14) and the rotation member 323 (e.g., e.g., the rotation member 323 or the rotating body 323a of FIGS. 12 to 14). In an embodiment, when the fourth protection member 529 is disposed, the above-described protection member (e.g., the first protection member 329-1 and/or the second protection member 329-2 of FIG. 10) may be omitted. The fourth protection member 529 may include, for example, at least one of a sponge material, a synthetic resin material, or a metal material, and have a lower elastic modulus than the hinge plate 525 and/or the rotation member 323. In an embodiment, when the third protection member 339 and/or the flexible display 330 of FIG. 8 is disposed on the hinge assembly 302, the fourth protection member 529 may be compressed so that the surface of the hinge plate 525 and the surface of the rotation member 323 may be aligned to form a substantially continuous plane (e.g., the plane indicated by 'P1' in FIG. 15).

Referring to FIG. 19, the electronic device 300 and/or the hinge assembly 302 may further include a fifth protection member 529a aligned on substantially the same plane as the hinge plate 525. In an embodiment, the fifth protection member 529a may be disposed on the rotating body 323a, in combination with at least one of the fourth protection member 529 or the protection member 329-1 or 329-2 of FIG. 10. The fifth protection member 529a may be disposed, for example, in the first seating groove (e.g., the first seating groove 323d of FIG. 14) together with the hinge plate 525 on the rotation member 323.

As described above, an electronic device (e.g., the electronic device 101, 200, or 300 of FIGS. 1 to 4 or FIG. 8) according to embodiment(s) of the disclosure may include protection member(s) (e.g., the protection member(s) 329 and 339 of FIG. 8 or 14) disposed in an area supporting a flexible display (e.g., the display module 160 of FIG. 1, the display 230 of FIGS. 2 and 4, or the flexible display 330 of FIG. 8), thereby stably supporting the flexible display even if there is a manufacturing tolerance and/or an assembly tolerance. In an embodiment, the protection member(s) may be configured to have a flat surface supporting the flexible display, even when there is a step at the boundary between mechanical parts, thereby inhibiting or alleviating damage to the flexible display during repeated deformation, and providing a user with improved emotional quality and/or improved reliability of a product.

The effects obtainable in the disclosure are not limited to the effects mentioned above, and other effects not mentioned will be clearly understood by those skilled in the art from the description of the foregoing embodiment(s).

According to an embodiment of the disclosure, an electronic device (e.g., the electronic device 101, 200, or 300 of FIGS. 1 to 4 or FIG. 8) may include a housing (e.g., the housing 201 or 301 of FIG. 4 or FIG. 8) including a first housing (e.g., the first housing 210 or 310 of FIG. 4 or FIG. 8), a second housing (e.g., the second housing 220 or 320 of FIG. 4 or FIG. 8), and a hinge assembly (e.g., the hinge assembly 202 or 302 of FIG. 4 or FIG. 8) pivotably coupling the first housing and the second housing and configured to provide at least one folding axis (e.g., the folding axis A of FIG. 4), wherein the housing is configured to form an exterior of the electronic device, and a flexible display (e.g., the display module 160 of FIG. 1, the display 230 of FIGS. 2 and 4, or the flexible display 330 of FIG. 8) including a first display area (e.g., the first display area 231 or 331 of FIG. 2, FIG. 4 or FIG. 8) disposed on one surface of the first housing, a second display area (e.g., the second display area 232 or 332 of FIG. 2, FIG. 4 or FIG. 8) disposed on one surface of the second housing, and a folding area (e.g., the folding area 233 or 333 of FIG. 2, FIG. 4 or FIG. 8) connecting the first display area and the second display area and disposed on at least a portion of the hinge assembly, wherein the flexible display is configured to output a screen. In an embodiment, the folding area may be configured to be deformed into a curved shape or a flat shape according to pivoting of the first housing or the second housing. In an embodiment, the hinge assembly may include a hinge bracket (e.g., the hinge bracket 321 of FIG. 12 or FIG. 13), a first rotation member (e.g., the first rotation member 323-1 of FIG. 10 or the rotation member 323 of FIGS. 12 to 14) including a first rotating body (e.g., the rotating body 323a of FIGS. 12 to 14) rotatably coupled to the hinge bracket and configured to rotate about the at least one folding axis, a first hinge plate (e.g., the first hinge plate 325-1 of FIG. 10 or the hinge plate 325 of FIGS. 12 to 14) having a portion disposed in the first housing and another portion (e.g., the seating portion 325b of FIGS. 12 to 14) fixed to the first rotating body between the flexible display and the first rotation member, a first receiving groove (e.g., the first receiving groove 325a of FIGS. 12 to 14) provided in the first hinge plate in an area overlapping with the first rotating body, and a first protection member (e.g., the second protection member 329-2 of FIG. 10 or the protection member 329 of FIGS. 12 to 16) including a first portion (e.g., the first portion 329a of FIG. 15 or FIG. 16) disposed within the first receiving groove, and a second portion (e.g., the second portion 329b of FIG. 15 or FIG. 16) extending from one side of the first portion and disposed on the first rotating body outside the first hinge plate.

According to an embodiment, on the first hinge plate, the first protection member may be configured to inhibit deformation of the folding area of the flexible display due to an external force.

According to an embodiment, the first portion of the first protection member may be directly attached to the first hinge plate, and the second portion of the first protection member may be disposed to be contactable with the first rotating body without being attached to the first rotating body by including a cover film (e.g., the cover film 429c of FIG. 16) disposed to face the first rotating body.

According to an embodiment, a portion of a surface of the first protection member may be disposed to face the flexible display and to form a continuous plane (e.g., the plane indicated by 'P1' in FIG. 15) with a surface of the first rotating body or a surface of the hinge plate.

According to an embodiment, the hinge assembly may further include a first seating groove (e.g., the first seating groove 323d of FIG. 14 or FIG. 15) provided in a first depth (e.g., the first depth d1 in FIG. 15) from a surface of the first rotating body, and a second seating groove (e.g., the second seating groove 323e of FIG. 14 or FIG. 15) provided in a second depth (e.g., the second depth d2 in FIG. 15) smaller than the first depth from the surface of the first rotating body and disposed in contact with the first seating groove. In an embodiment, a portion of the hinge plate and the first portion of the first protection member may be at least partially disposed in the first seating groove. In an embodiment, the second portion of the first protection member may be at least partially disposed in the second seating groove.

According to an embodiment, the first protection member may include at least one of a sponge material, a synthetic resin material, or a metal material.

According to an embodiment, the hinge assembly may further include a hinge cover (e.g., the hinge cover 240 or 340 of FIG. 3, FIG. 4, and/or FIG. 8) disposed between the first housing and the second housing. In an embodiment, the hinge bracket may be disposed on the hinge cover.

According to an embodiment, the hinge cover may be configured to be at least partially exposed to an external space, as the first housing or the second housing pivots.

According to an embodiment, the first protection member may be disposed between the folding area and the hinge cover.

According to an embodiment, the hinge assembly may further include a second rotation member (e.g., the first rotation member 323-1 of FIG. 10 or the rotation member 323 of FIGS. 12 to 14) including a second rotating body (e.g., the rotating body 323a of FIG. 12 to 14) rotatably coupled to the hinge bracket and configured to rotate about the at least one folding axis, a second hinge plate (e.g., the second hinge plate 325-2 of FIG. 10 or the hinge plate 325 of FIGS. 12 to 14) having a portion disposed in the second housing and another portion fixed to the second rotating body between the flexible display and the second rotation member, a second receiving groove (e.g., the receiving groove 325a of FIGS. 12 to 14) provided in the second hinge plate in an area overlapping with the second rotating body, and a second protection member (e.g., the second protection member 329-2 of FIG. 10 or the protection member 319 of FIGS. 12 to 16) having a portion disposed within the second receiving groove and another portion disposed on the second rotating body outside the second hinge plate. In an embodiment, when the folding area is in a flat shape, the second protection member may be disposed side by side with the first protection member and configured to inhibit deformation of the folding area of the flexible display on the second hinge plate due to the external force.

According to an embodiment, the electronic device and/or the hinge assembly may further include a third protection member (e.g., the third protection member 339 of FIG. 10) having a portion disposed to face the first protection member and another portion disposed to face the hinge plate. In an embodiment, the third protection member may be at least partially disposed between the hinge plate and the flexible display.

According to an embodiment of the disclosure, an electronic device (e.g., the electronic device 101, 200, or 300 of FIGS. 1 to 4 or FIG. 8) may include a housing (e.g., the first housing 210 or 310 of FIG. 4 or FIG. 8) including a first housing (e.g., the first housing 210 or 310 of FIG. 4 or FIG. 8), a second housing (e.g., the second housing 220 or 320 of FIG. 4 or FIG. 8), and a hinge assembly (e.g., the hinge assembly 202 or 302 of FIG. 4 or FIG. 8) pivotably coupling the first housing and the second housing and configured to provide at least one folding axis (e.g., the folding axis A in FIG. 4), wherein the housing is configured to form an exterior of the electronic device, and a flexible display (e.g., the display module 160 of FIG. 1, the display 230 of FIG. 2 or FIG. 4, or the flexible display 330 of FIG. 8) including a first display area (e.g., the first display area 231 or 331 of FIG. 2, FIG. 4, or FIG. 8) disposed on one surface of the first housing, a second display area (e.g., the second display area 232 or 332 of FIG. 2, FIG. 4, or FIG. 8) disposed on one surface of the second housing, and a folding area (e.g., the folding area 233 or 333 of FIG. 2, FIG. 4, or FIG. 8) connecting the first display area and the second display area and disposed on at least a portion of the hinge assembly, wherein the flexible display is configured to output a screen. In an embodiment, the hinge assembly may include a hinge bracket (e.g., the hinge bracket 321 of FIG. 12 or FIG. 13), a rotation member (e.g., the rotation member 323 of FIGS. 12 to 14) including a rotating body (e.g., the rotating body 323a of FIGS. 12 to 14) rotatably coupled to the hinge bracket and configured to rotate about the at least one folding axis, and a support body (e.g., the support body 323b of FIGS. 12 to 14) extending from the rotating body, a hinge plate (e.g., the hinge plate 325 of FIGS. 12 to 14) having a portion disposed in the first housing or the second housing and another portion (e.g., the seating portion 325b of FIGS. 12 to 14 fixed to the rotation member between the flexible display and the rotation member, a receiving groove (e.g., the receiving groove 325a of FIGS. 12 to 14) provided in the first hinge plate in an area overlapping with the rotating body, and a protection member (e.g., the protection member 329 of FIGS. 12 to 16) including a first portion (e.g., the first portion 329a of FIG. 15 or FIG. 16) disposed on the hinge plate within the receiving groove, and a second portion (e.g., the second portion 329b of FIG. 15 or FIG. 16) extending from one side of the first portion and disposed on the rotating body outside the hinge plate.

According to an embodiment, the protection member may be configured to accumulate an elastic force, while being deformed in response to an external force.

According to an embodiment, the first portion of the protection member may be directly attached to the first hinge plate, and the second portion of the protection member may be disposed to be contactable with the first rotating body without being attached to the first rotating body.

According to an embodiment, the second portion of the protection member may include a cover film (e.g., the cover film 429c of FIG. 16) disposed to face the rotating body.

According to an embodiment, a portion of a surface of the protection member may be disposed to face the flexible display and to form a continuous plane (e.g., the plane indicated by 'P1' in FIG. 15) with a surface of the rotating body or a surface of the hinge plate.

According to an embodiment, the hinge assembly may further include a first seating groove (e.g., the first seating groove 323d of FIG. 14 or FIG. 15) provided in a first depth (e.g., the first depth d1 in FIG. 15) from a surface of the first rotating body, and a second seating groove (e.g., the second seating groove 323e of FIG. 14 or FIG. 15) provided in a second depth (e.g., the second depth d2 in FIG. 15) smaller than the first depth from the surface of the first rotating body and disposed in contact with the first seating groove. In an embodiment, a portion of the hinge plate and the first portion of the protection member may be at least partially disposed in the first seating groove. In an embodiment, the second portion of the protection member may be at least partially disposed in the second seating groove.

According to an embodiment, the protection member may include at least one of a sponge material, a synthetic resin material, or a metal material.

According to an embodiment, the first portion of the protection member may be disposed between the folding area and the hinge plate.

According to an embodiment, the hinge assembly further includes a hinge cover (e.g., the hinge cover 240 or 340 of FIG. 3, FIG. 4, and/or FIG. 8) disposed between the first housing and the second housing. In an embodiment, the hinge bracket may be disposed on the hinge cover.

According to an embodiment, the hinge cover may be configured to be at least partially exposed to an external space, as the first housing or the second housing pivots.

According to an embodiment, the protection member may be disposed between the folding area and the hinge cover.

In light of the above, the embodiments disclosed herein provides many improvements such as improved surface quality and screen durability of electronic devices including flexible displays which are deformable between a state in which two different parts of a housing are folded to face each other and a state in which they are unfolded parallel to one side of each other.

While the disclosure has been described with respect to an embodiment, by way of example, it should be understood that the embodiment is intended to be illustrative rather than limiting the disclosure. It will be apparent to those skilled in the art that various changes in form and detailed configuration may be made without departing from the overall scope of the disclosure, including the appended claims and their equivalents. For example, the protection member in the above-described embodiment may be made of rubber or silicone in addition to a sponge material, a synthetic resin material, and/or a metal material. In this case, the protection member may be attached or coupled to the hinge plate at the same time as molding by a method such as insert injection. In an embodiment, the fourth protective member 529 and/or the fifth protective member 529a in FIG. 19 may be provided on the hinge plate by insert injection.

## Claims

1. An electronic device (101; 200; 300) comprising:
a housing (201; 301) including a first housing (210; 310), a second housing (220; 320), and a hinge assembly (202; 302) pivotably coupling the first housing and the second housing and configured to provide at least one folding axis (A), wherein the housing is configured to form an exterior of the electronic device; and
a flexible display (160; 230; 330) including a first display area (231; 331) disposed on one surface of the first housing, a second display area (232; 332) disposed on one surface of the second housing, and a folding area (233; 333) connecting the first display area and the second display area and disposed on at least a portion of the hinge assembly, wherein the flexible display is configured to output a screen,
wherein the folding area is configured to be deformed into a curved shape or a flat shape according to pivoting of the first housing or the second housing, and
wherein the hinge assembly includes:
a hinge bracket (321);
a first rotation member (323, 323-1) including a first rotating body (323a) rotatably coupled to the hinge bracket and configured to rotate about the at least one folding axis;
a first hinge plate (325, 325-1) having a portion disposed in the first housing and another portion fixed to the first rotating body between the flexible display and the first rotation member;
a first receiving groove (325a) provided in the first hinge plate in an area overlapping with the first rotating body; and
a first protection member (329, 329-1) including a first portion (329a) disposed within the first receiving groove, and a second portion (329b) extending from one side of the first portion and disposed on the first rotating body outside the first hinge plate.

2. The electronic device of claim 1, wherein, on the first hinge plate, the first protection member is configured to inhibit deformation of the folding area of the flexible display due to an external force.

3. The electronic device of claim 1 or 2, wherein the first portion of the first protection member is directly attached to the first hinge plate, and the second portion of the first protection member is disposed to be contactable with the first rotating body without being attached to the first rotating body by including a cover film (429c) disposed to face the first rotating body.

4. The electronic device of any one of claims 1 to 3, wherein a portion of a surface of the first protection member is disposed to face the flexible display and to form a continuous plane with a surface of the first rotating body or a surface of the hinge plate.

5. The electronic device of any one of claims 1 to 4, wherein the hinge assembly further includes a first seating groove (323d) provided in a first depth (d1) from a surface of the first rotating body, and a second seating groove (323e) provided in a second depth (d2) smaller than the first depth from the surface of the first rotating body and disposed in contact with the first seating groove,
wherein a portion of the hinge plate and the first portion of the first protection member are at least partially disposed in the first seating groove, and
wherein the second portion of the first protection member is at least partially disposed in the second seating groove.

6. The electronic device of any one of claims 1 to 5, wherein the first protection member includes at least one of a sponge material, a synthetic resin material, or a metal material.

7. The electronic device of any one of claims 1 to 6, wherein the hinge assembly further includes a hinge cover (240; 340) disposed between the first housing and the second housing and configured to be at least partially exposed to an external space, as the first housing or the second housing pivots, and
wherein the hinge bracket is disposed on the hinge cover.

8. The electronic device of claim 7, wherein the first protection member is disposed between the folding area and the hinge cover.

9. The electronic device of any one of claims 1 to 8, wherein the hinge assembly further includes:
a second rotation member (323, 323-2) including a second rotating body rotatably coupled to the hinge bracket and configured to rotate about the at least one folding axis;
a second hinge plate (325, 325-2) having a portion disposed in the second housing and another portion fixed to the second rotating body between the flexible display and the second rotation member;
a second receiving groove (325a) provided in the second hinge plate in an area overlapping with the second rotating body; and
a second protection member (329, 329-2) having a portion disposed within the second receiving groove and another portion disposed on the second rotating body outside the second hinge plate, and
wherein when the folding area is in a flat shape, the second protection member is disposed side by side with the first protection member and configured to inhibit deformation of the folding area of the flexible display on the second hinge plate due to the external force.

10. The electronic device of any one of claims 1 to 9, further comprising a third protection member (339) having a portion disposed to face the first protection member and another portion disposed to face the hinge plate,
wherein the third protection member is at least partially disposed between the hinge plate and the flexible display.

11. The electronic device of any one of claims 1 to 10, wherein the first rotation member (323) further includes a first support body (323b) extending from the first rotating body.

12. The electronic device of claim 11, wherein the protection member is configured to accumulate an elastic force, while being deformed in response to an external force.

13. The electronic device of claim 11 or 12, wherein the first portion of the protection member is directly attached to the first hinge plate, and the second portion of the protection member is disposed to be contactable with the first rotating body without being attached to the first rotating body.

14. The electronic device of any one of claims 11 to 13, wherein the first portion of the protection member is disposed between the folding area and the hinge plate.
